# EUROPÄISCHE PATENTSCHRIFT

(11) **EP 2 881 184 B1**
(45) Veröffentlichungstag und Bekanntmachung des Hinweises auf die Patenterteilung: **27.03.2019**
(21) Anmeldenummer: 14194234.2
(22) Anmeldetag: 21.11.2014
(51) Int. Cl.: B06B 3/00, B06B 3/02, B23K 20/10, B29C 65/08

(54) **ULTRASCHALLSCHWEISSVORRICHTUNG UND ULTRASCHALLSCHWEISSVERFAHREN ZUR REGELUNG VON KONTINUIERLICHEN ULTRASCHALLSCHWEISSPROZESSEN**
ULTRASONIC WELDING DEVICE AND ULTRASONIC WELDING METHOD FOR CONTROLLING CONTINUOUS ULTRASONIC WELDING PROCESSES
DISPOSITIF DE SOUDURE À ULTRASONS ET PROCÉDÉ DE SOUDURE À ULTRASONS DESTINÉS À LA RÉGULATION DE PROCESSUS DE SOUDURE À ULTRASONS CONTINUS

(30) Priorität: 05.12.2013 DE 102013225042
(43) Veröffentlichungstag der Anmeldung: 10.06.2015
(73) Patentinhaber: Branson Ultraschall Niederlassung der Emerson Technologies GmbH & Co. oHG, 63128 Dietzenbach (DE)
(72) Erfinder: Heeg, Christian, 63776 Mömbris (DE)
(74) Vertreter: Heyer, Volker

(56) Entgegenhaltungen:
- EP-A2- 0 967 021
- WO-A2-96/14202
- DE-A1- 10 009 174
- DE-A1-102011 102 746
- GB-A- 2 279 034

## Beschreibung

### 1. Gebiet der Erfindung

Die vorliegende Erfindung betrifft eine Ultraschallbearbeitungsvorrichtung sowie ein Ultraschallbearbeitungsverfahren, mit denen kontinuierliche Ultraschallschweißprozesse zum Ultraschallschweißen von Bahnmaterial gesteuert bzw. geregelt werden.

### 2. Hintergrund der Erfindung

Vorrichtungen zum fortlaufenden Ultraschallbearbeiten einer Materialbahn sind hinreichend bekannt. Bei diesen Vorrichtungen weist die Ultraschallschwingeinheit in der Regel einen Konverter, häufig einen elektroakustischen Wandler, auf, an dem über ein Amplitudentransformationsstück, auch Booster genannt, eine Sonotrode angeordnet ist. Es gibt aber auch Ausführungsformen, bei denen die Sonotrode direkt mit dem Konverter verbunden ist. Bei derartigen Ultraschallschwingeinheiten ist entweder das Schwingmodul in einem Konvertergehäuse oder das Amplitudentransformationsstück über einen Haltering oder die Sonotrode in einer Aufnahme gelagert. Diese Lagerungen befinden sich stets oder zumindest in der Nähe der Schwingungsknoten der Ultraschallschwingung. Die Sonotrode der Schwingeinheit ist gegenüber einem Gegenwerkzeug angeordnet. Beim Ultraschallschweißen von Bahnmaterial besteht das Gegenwerkzeug aus einer Walze, die eine gleichmäßige oder eine nicht-gleichmäßige Umfangskontur bzw. Schweißkontur aufweist. Es ist ebenfalls bekannt, eine drehbare Sonotrode, bspw. in Form einer Walze, vorzusehen. Diese Sonotroden-Walze umfasst in verschiedenen Ausführungsformen den Konverter. Zudem ist die Sonotroden-Walze gegenüber einem Gegenwerkzeug, bspw. ein Amboss, drehbar angeordnet. Die drehbare Sonotroden-Walze und das Gegenwerkzeug führen eine Relativbewegung in Bezug aufeinander aus, so dass ein Spalt zwischen beiden einstellbar ist. Zudem weist die drehbare Sonotroden-Walze eine gleichmäßige oder eine nicht-gleichmäßige Umfangskontur bzw. Schweißkontur auf.

Zum Betreiben eines elektroakustischen Wandlers (Konverter mit Piezokeramik) mit dessen Parallel- oder Ultraschallresonanzfrequenz, bei der es sich üblicherweise um eine vorbestimmte Frequenz in dem Bereich zwischen 18 kHz und 60 kHz handelt, wird eine spezielle elektronische Stromversorgung, ein Ultraschallgenerator, benötigt. Die Stromversorgung eines piezoelektrischen Wandlers, der mit einer Sonotrode versehen ist, muß in der Lage sein, diesen mit dessen Resonanzfrequenz zu speisen. Eine solche Kombination aus Wandler und Sonotrode wird meistens zum Schweißen von thermoplastischen Teilen benutzt, bei der eine Leistung von mehreren hundert Watt bis zu einigen Kilowatt für Zeitintervalle benötigt wird, die von mehreren Millisekunden bis zu einer kontinuierlichen Belastung reicht. Diese bekannten Ultraschallgeneratoren steuern bzw. regeln nur den elektroakustischen Wandler.

Zur Einstellung einer optimalen Schweiß- und/oder Schneidspalthöhe zwischen der Sonotrode und dem Gegenwerkzeug wird die Ultraschallschwingeinheit z. B. mittels eines pneumatischen Antriebs gegen einen Anschlag gefahren und auf diese Weise bezüglich des Gegenwerkzeugs fest positioniert. Hier besteht der Nachteil, dass die Ultraschallschwingeinheit nicht auf Variationen der Dicke des zu schweißenden Materials reagieren kann. Diese starre Lagerung der Sonotrode ist beispielsweise in DE 195 81 256 B4 beschrieben.

Es sind aber auch Vorrichtungen bekannt, bei denen die Ultraschallschwingeinheit über elektromotorische Antriebe (z. B. Schrittmotor oder Servomotor) zugestellt wird.

In DE 195 26 354 C1 erfasst ein Sensor den Abstand zwischen der Sonotrode und dem Gegenwerkzeug. Ein entsprechendes Signal des Sensors wird an eine externe Steuer- und Regeleinrichtung übermittelt. In Abhängigkeit von diesem Sensorsignal wird eine Änderung des Abstands zwischen der Sonotrode und dem Gegenwerkzeug angesteuert. In DE 10 2006 054 760 A1 bewegt ein Antrieb die Sonotrode auf das Gegenwerkzeug zu oder das Gegenwerkzeug wird auf die Sonotrode zu bewegt. Ein Sensor erfasst die Zustandsdaten des Antriebs an seinem Eingang oder seinem Ausgang. In Abhängigkeit von diesen Zustandsdaten, die durch den Sensor erfasst werden, wird der Abstand zwischen Sonotrode und Gegenwerkzeug verändert. In DE 197 53 740 C1 wiederum erfasst ein Kraftsensor die Anpresskraft der Sonotrode in Richtung Gegenwerkzeug. Entsprechend dieser erfassten Anpresskraft wird durch den Sensor ein Signal erzeugt und an eine externe Steuer- oder Regeleinrichtung weiter geleitet. Diese Steuer- oder Regeleinrichtung gibt dann ein entsprechendes Steuersignal ab, entsprechend dessen der Abstand zwischen Sonotrode und Gegenwerkzeug eingestellt wird.

Wird nun eine Materialbahn durch den Schweiß- oder Schneidspalt geführt, dann wirkt sowohl durch die Materialbahn als auch durch die Schweißkraft eine Reaktionskraft auf die Sonotrode. Insbesondere bei hohen und/oder veränderlichen Schweißkräften, hohen Bahngeschwindigkeiten, bei sich verändernder Dicke der Bahn und speziellen Konturen der Walzen führt diese Reaktionskraft dazu, dass die Sonotrode der Materialbahn ausweicht, d.h. sich vom Gegenwerkzeug entfernt. Besonders groß ist die Reaktionskraft des Bahnmaterials, wenn die Walze sogenannte Quernähte oder quernahtähnliche Konturen, d.h. eine nicht-gleichmäßige Umfangskontur, aufweist. Dies sind in der Regel quer zur Walzendrehrichtung verlaufende Konturen, d.h. die Schweißung erfolgt nicht flächig, sondern nur auf diesen Konturen (Erhebungen) wird geschweißt. Das dient in der Regel dazu, die fertigen Einzelprodukte, in einem nachgeschalteten Prozessschritt aus der Materialbahn zu schneiden. In der Praxis hat sich gezeigt, dass derartige Konturen schwierig mit gleichbleibender Qualität zu verschweißen sind. Da die Reaktionskraft des Bahnmaterials stärker ist als die Zustellkraft, entsteht eine Ausweichbewegung durch Lagerung und Spiel in den Antriebskomponenten der Ultraschallschwingeinheit und der Spalt wird so weit geöffnet, dass die folgende Naht keine geeignete Festigkeit aufweist. Insofern ist gerade bei der folgenden Naht das Schweißergebnis nicht zufriedenstellend.

DE 44 00 210 A1 beschreibt ein Verfahren zur physikalisch richtigen Kontrolle der Frequenz und Leistungsabgabe eines digitalen Generators, insbesondere für einen Ultraschallschweißprozeß, sowie eine Verringerung des Aufwandes bei der maßgerechten Fertigung von Ultraschallwandler, Amplitudentransformator und Sonotrode. Das Verfahren, das mittels einer digitalen Kontrolleinheit durchgeführt wird, kompensiert nicht nur die Streuung der Resonanzfrequenz über einen weiten Bereich, sondern ist auch in der Lage, Verschiebungen des Resonanzpunktes während des Schweißprozesses aufgrund von Temperatur- oder Druckänderungen auszuregeln. Leistungsschwankungen verursacht durch Schwankungen der Versorgungsspannung oder des Druckes werden von der Software erkannt und ausgeglichen. Die Software registriert den Gesamtablauf von Inline-Maschinen, passt seine Parameter an und überwacht den gesamten Zyklus. Der Ablauf der einzelnen Vorgänge, wie: Parametererkennung des Wandlersystems im Leerlauf, Erkennung der Parameter unter Druck, Energie möglichst schonend für die akustischen und elektronischen Komponenten einleiten, Erkennung von Trends wichtiger Systemparameter und Überschreiten von vorgegebenen Grenzwerten, wird von der Software erledigt. Die Software ermittelt automatisch die physikalisch richtigen Steuer- und Regelparameter und gewährleistet dadurch einen optimalen Wirkungsgrad bei der Umsetzung von elektrischer Energie in Ultraschallenergie .

DE 100 09 174 A1 beschreibt eine Ultraschallbearbeitungsvorrichtung, die über eine externe Steuer- und Regeleinrichtung betrieben wird. Die externe Steuer- und Regeleinrichtung erhält ein Signal vom Ultraschallgenerator, das die Ausgangsleistung des Generators charakterisiert. Um diese Ausgangsleistung des Generators zu regeln, wird die Anpresskraft oder die Amplitude der Sonotrode über die Steuer- und Regeleinrichtung angepasst. Durch die Variation der Amplitude der Sonotrode sind Veränderungen der Ausgangsleistung des Generators schnell erfassbar und es ergeben sich Reaktionszeiten der Ultraschallschwingeinheit in der Größenordnung von 5 bis 10 ms. Wird die Anpresskraft der Sonotrode über die Steuerung eines Ventils variiert, ergeben sich Reaktionszeiten in der Größenordnung von 50 bis 700 ms.

Das Einstellen der Leistung einer Ultraschallschweißeinheit ist in GB 2,279,034 A beschrieben. Der mittlere Abstand der Sonotrode vom Amboss wird so gesteuert, dass die gemessene Leistungsaufnahme der Schweißeinheit mit einem vorbestimmten Steuerwert übereinstimmt. Der Steuerwert wird experimentell als eine Funktion der Geschwindigkeit für jede einzelne Dicke des zu verbindenden Materials bestimmt.

Ein kontinuierlicher Ultraschallbearbeitungsprozess und eine Vorrichtung für Bahnmaterial ist in WO 96/14202 beschrieben. Die Materialbahn wird durch einen Spalt zwischen dem Gegenwerkzeug und der Ultraschallschwingeinheit geführt. Die Ultraschallschwingeinheit weist einen Konverter und eine mit diesem verbundene Sonotrode auf. Die Ultraschallschwingeinheit ist über eine Verstell-Einrichtung im Wesentlichen starr im Maschinenständer für das Gegenwerkzeug angeordnet und die Verstell-Einrichtung ist nach einem Einstellvorgang starr mit dem Maschinenständer verbindbar.

In DE 10 2011 102 746 A1 ist ein Verfahren zur Einstellung einer Ultraschallbearbeitungsvorrichtung beschrieben. Hierbei wird ein zu bearbeitendes Material zwischen einer Sonotrode und einem Amboss positioniert. Mit einem Generator wird eine Leistung auf die Sonotrode übertragen. Zur Erreichung einer vorgegebenen Amplitude der Sonotrode wird ein Abstand zwischen der Sonotrode und dem Amboss eingestellt. Der Abstand zwischen der Sonotrode und dem Amboss wird so lange variiert, bis die vom Generator an die Sonotrode abgegebene Leistung einem vorgegebenen, materialangepassten Schwellenwert entspricht.

Schließlich ist in EP 0 967 021 A2 eine Ultraschallschweißvorrichtung und ein Verfahren mit geschlossenem Schaltkreis beschrieben. Die Schweißstation umfasst eine Sonotrode und einen Amboss. Weiterhin sind Mittel vorgesehen, um drei Signale bereitzustellen. Das erste Signal ist proportional zu einer gewünschten Ultraschallenergiedichte im verschweißten Material. Das zweite Signal reagiert auf die Zuführgeschwindigkeit des Materials. Das dritte Signal ist proportional zur in das Material eingekoppelten Leistung. Ein Steuermittel empfängt die Signale und erzeugt ein Fehlersignal, das auf den Unterschied zwischen der gewünschten und der aktuellen Energiedichte reagiert. Das Fehlersignal wird dann in ein Steuersignal umgewandelt, um den Ausgang der Leistungsversorgung zu steuern und/oder die Eingriffskraft zwischen der Sonotrode und dem Material zu steuern.

Es ist die Aufgabe vorliegender Erfindung, den Betrieb bekannter Ultraschallbearbeitungsvorrichtungen dahingehend zu verbessern, dass schnell und flexibel auf eine Veränderung der Arbeitsbedingungen der Ultraschallbearbeitungsvorrichtung eingegangen werden kann, sodass das Bearbeitungsergebnis der Ultraschallbearbeitungsvorrichtung garantiert ist.

### 3. Zusammenfassung der Erfindung

Die obige Aufgabe wird durch eine Ultraschallbearbeitungsvorrichtung gemäß den unabhängigen Ansprüchen 1 und 3 sowie durch ein Ultraschallbearbeitungsverfahren gemäß dem unabhängigen Anspruch 13 gelöst. Vorteilhafte Ausgestaltungen vorliegender Erfindung sowie Weiterentwicklungen ergeben sich aus der folgenden Beschreibung, den begleitenden Zeichnungen sowie den anhängenden Ansprüchen.

Die erfindungsgemäße Ultraschallbearbeitungsvorrichtung weist die folgenden Merkmale auf: einen Ultraschallgenerator, einen Konverter und mindestens eine Sonotrode mit gegenüberliegend angeordnetem Gegenwerkzeug, die um einen Spalt voneinander beabstandet sind, wobei die Sonotrode oder das Gegenwerkzeug drehbar angeordnet ist und eine gleichmäßige Umfangsfläche aufweist, ein Steuer/Regel-Modul, vorzugsweise ein digitales Steuer/Regel-Modul, das in eine Signalverarbeitung des Ultraschallgenerators integriert ist, sodass bezogen auf den Ultraschallgenerator eine Mehrzahl von Generatordaten, insbesondere eine elektrische Spannung U, ein elektrischer Strom I, eine Ist-Amplitude Aᵢₛₜ und/oder eine Ist-Generator-Leistung Pᵢₛₜ, im Ultraschallgenerator verarbeitbar ist, wobei a) über einen Spaltregler im Steuer/Regel-Modul ein Leistungs-Istwert Pᵢₛₜ mit einem Leistungs-Sollwert Pₛₒₗₗ des Ultraschallgenerators vergleichbar ist, um zur Einstellung des Leistungs-Sollwerts Pₛₒₗₗ des Ultraschallgenerators einen Positionssollwert POSₛₒₗₗ der Sonotrode relativ zur Walze vorzugeben und einzustellen, und/oder wobei b) über einen Amplitudenregler im Steuer/Regel-Modul ein Leistungs-Istwert Pᵢₛₜ mit einem Leistungs-Sollwert Pₛₒₗₗ des Ultraschallgenerators vergleichbar ist, um zur Einstellung des Leistungs-Sollwerts Pₛₒₗₗ dem Ultraschallgenerator einen Amplitudensollwert Aₛₒₗₗ vorzugeben.

Die erfindungsgemäße Ultraschallbearbeitungsvorrichtung wird zum Schweißen, Schneiden und/oder Nähen von Material mittels Ultraschall verwendet. Dabei bewegt sich Endlosbahnmaterial durch den Spalt zwischen dem Gegenwerkzeug und der Sonotrode der Ultraschallbearbeitungsvorrichtung. Die Sonotrode und das Gegenwerkzeug sind über eine Relativbewegung in ihrem Abstand zueinander einstellbar, so dass ein Spalt mit definierter Breite zwischen Sonotrode und Gegenwerkzeug vorliegt. Gemäß einer bevorzugten Ausführungsform vorliegender Erfindung ist die Sonotrode gegenüber einer drehbar befestigten Walze als Gegenwerkzeug angeordnet. Eine weitere bevorzugte Ausführungsform sieht vor, dass die Sonotrode bspw. in Form einer Sonotroden-Walze drehbar angeordnet ist. Zu diesem Zweck ist vorzugsweise mindestens eine Sonotrode in einer drehbar angeordneten Walze installiert, so dass die radiale Außenfläche der Walze mit ihrer Umfangskontur die Ultraschallschwingungen der Sonotrode/n an das Bahnmaterial überträgt. Dabei wird das Gegenwerkzeug durch einen Amboss gebildet ist. Um den Spalt zwischen drehbarer Sonotrode und Amboss in seiner Breite einstellen zu können, sind vorzugsweise der Amboss und/oder die drehbare Sonotrode bewegbar, um die oben genannte Relativbewegung zwischen beiden zu gewährleisten.

Besonders bevorzugt wird die Ultraschallbearbeitungsvorrichtung als Ultraschallschweißvorrichtung eingesetzt. Im Unterschied zu den oben diskutierten Ultraschallbearbeitungsvorrichtungen des Standes der Technik wird die Steuerung und Regelung des kompletten Bearbeitungsprozesses im Ultraschallgenerator durchgeführt. Zu diesem Zweck umfasst die Signalverarbeitung des Ultraschallgenerators ein Steuer/Regel-Modul, mit dem die Bedingungen der Bearbeitungsvorgänge bestimmt werden. Dazu gehört vorzugsweise eine Signalgenerierung für das Positionieren externer Aktuatorsysteme, wie bspw. des Spalts bzw. des Abstands zwischen der Sonotrode und der Walze. Da das Steuer/Regel-Modul in die Signalverarbeitung des Ultraschallgenerators integriert ist, stehen hier auch die für den Betrieb des Ultraschallgenerators erforderlichen Generatordaten oder eine Auswahl davon zur Verfügung. Zu dieser Mehrzahl an Generatordaten zählen bspw. die elektrische Spannung U, der elektrische Strom I, die Ist-Amplitude Aᵢₛₜ und die Ist-Generatorleistung Pᵢₛₜ. Falls erforderlich, greift das Steuer/Regel-Modul auf zumindest eine Auswahl der Mehrzahl von Generatordaten zu, ohne dass Zeit für die Umwandlung und/oder Anpassung und/oder Übermittlung der Generatordaten zwischen Ultraschallgenerator und Steuer/Regel-Modul erforderlich ist. Neben der damit eingehenden Zeitersparnis im Rahmen des Datenverarbeitungsprozesses für den Ultraschallbearbeitungsvorgang wird durch diese Kombination von Ultraschallgenerator und integriertem Steuer/Regel-Modul auch eine Überprüfung und genauere Berechnung von Verarbeitungsdaten für den Ultraschallbearbeitungsvorgang gewährleistet. Des Weiteren hat die hier genutzte Integration des Steuer/Regel-Moduls in die Signalverarbeitung des Ultraschallgenerators zur Folge, das auf aufwändige, teilweise störanfällige und zudem teilweise platzintensive externe Steuerungen, bspw. zur Spaltregelung zwischen Sonotrode und Walze bzw. Amboss, verzichtet werden kann.

Die Ultraschallbearbeitungsvorrichtung regelt den Ultraschallbearbeitungsvorgang in Abhängigkeit von einer Leistung des Ultraschallgenerators. Der gewünschte Leistungs-Sollwert Pₛₒₗₗ des Ultraschallgenerators wird durch den Spaltregler und/oder den Amplitudenregler im Steuer/Regel-Modul eingestellt. Soll bspw. ein vorgewählter Leistungs-Sollwert Pₛₒₗₗ des Ultraschallgenerators erreicht werden, steuert der Spaltregler einen entsprechenden Positionssollwert POSₛₒₗₗ der Sonotrode relativ zum Gegenwerkzeug, d.h. zur Walze bzw. zum Amboss, an. In Kombination damit oder als Alternative zum Spaltregler ist es ebenfalls bevorzugt, einen Amplitudenregler in der Ultraschallbearbeitungsvorrichtung einzusetzen. Bei einem definiert eingestellten Spalt zwischen Sonotrode und Gegenwerkzeug, vorzugsweise Walze bzw. Amboss, verändert gezielt der Amplitudenregler die Amplitude der durch den Ultraschallgenerator erzeugten und in die Sonotrode eingeprägten Ultraschallschwingung. Entsprechend erzeugt die Ansteuerung einer größeren Amplitude durch den Amplitudenregler im Steuer/Regel-Modul eine Verkleinerung des Spalts zwischen der Sonotrode und dem Gegenwerkzeug, vorzugsweise der Walze bzw. dem Amboss, wodurch der Leistungs-Istwert Pᵢₛₜ des Ultraschallgenerators erhöht wird. In gleicher Weise erzeugt die Ansteuerung einer kleineren Amplitude der durch den Ultraschallgenerator erzeugten Ultraschallschwingung eine Vergrößerung des Spalts zwischen Sonotrode und Walze bzw. Amboss oder Gegenwerkzeug. Somit sind mithilfe des Spaltreglers und des Amplitudenreglers allein oder in Kombination gezielt Leistungs-Sollwerte Pₛₒₗₗ des Ultraschallgenerators ansteuerbar bzw. einregelbar.

Gemäß einer bevorzugten Ausführungsform vorliegender Erfindung weist die Ultraschallbearbeitungsvorrichtung einen externen Sensor auf, mit dem eine Winkelgeschwindigkeit der drehbar angeordneten Sonotrode oder dem drehbar angeordneten Gegenwerkzeug erfassbar ist. Diese erfasste Winkelgeschwindigkeit wird an den Spaltregler und/oder den Amplitudenregler im Ultraschallgenerator übermittelt. Bei der Bearbeitung von Bahnmaterial wird die Spaltbreite zwischen Sonotrode und Gegenwerkzeug, bevorzugt eine rotierende Walze, in Abhängigkeit von der Geschwindigkeit des Bahnmaterials, das sich durch den Spalt bewegt, eingestellt. Die durch den Sensor ermittelte Winkelgeschwindigkeit des Gegenwerkzeugs oder der Walze repräsentiert die Geschwindigkeit des Bahnmaterials. Wird die durch den Sensor ermittelte Winkelgeschwindigkeit an den Amplitudenregler und/oder den Spaltregler übermittelt, so greifen bevorzugt beide Regler auf eingelernte Kennlinien und/oder Kennwerttabellen zurück, die einen Leistungs-Sollwert Pₛₒₗₗ des Ultraschallgenerators in Abhängigkeit von der Geschwindigkeit des Bahnmaterials durch den Spalt zwischen Sonotrode und Gegenwerkzeug liefern. Sobald dieser Leistungs-Sollwert Pₛₒₗₗ des Ultraschallgenerators mit seinem Leistungs-Istwert Pᵢₛₜ verglichen wird, gibt ein bevorzugt vorgesehener Regler einen auf den Vergleich abgestimmten Amplitudensollwert für die Amplitude der Ultraschallschwingung des Ultraschallgenerators vor. In gleicher Weise gibt der Spaltregler einen Positionssollwert für die Sonotrode oder das Gegenwerkzeug relativ zur gegenüberliegend angeordneten Walze vor, um den Spalt in seiner Breite einstellen zu können. Innerhalb des Ultraschallgenerators wird dann der vorgegebene Amplitudensollwert mit dem derzeit vorhandenen Amplitudenistwert verglichen und dann entsprechend eingeregelt. Vorzugsweise ermittelt ein Positionssensor die Position der Sonotrode gegenüber dem Gegenwerkzeug, vorzugsweise die rotierende Walze oder der Amboss, sodass zur Einstellung des Positionssollwerts ein Servomotor die Sonotrode entsprechend versetzen kann.

Vorliegende Erfindung umfasst ebenfalls eine Ultraschallbearbeitungsvorrichtung, die die folgenden Merkmale aufweist: einen Ultraschallgenerator, einen Konverter und mindestens eine Sonotrode mit gegenüberliegend angeordnetem Gegenwerkzeug, vorzugsweise eine drehbare Walze, die um einen Spalt voneinander beabstandet sind, wobei die Sonotrode oder das Gegenwerkzeug drehbar angeordnet ist und eine nicht-gleichmäßige Umfangsfläche aufweist, ein Steuer/Regel-Modul, vorzugsweise eine digitales Steuer/Regel-Modul, dass in eine Signalverarbeitung des Ultraschallgenerators integriert ist, sodass bezogen auf den Ultraschallgenerator eine Mehrzahl von Generatordaten, insbesondere eine elektrische Spannung U, ein elektrischer Strom I, eine Ist-Amplitude Aᵢₛₜ und/oder eine Ist-Generatorleistung Pᵢₛₜ, im Ultraschallgenerator verarbeitbar ist, wobei (a) über einen Spaltregler im Steuer/Regel-Modul ein Leistungsistwert Pᵢₛₜ mit einem Leistungs-Sollwert Pₛₒₗₗ des Ultraschallgenerators vergleichbar ist, um zur Einstellung des Leistungs-Sollwerts Pₛₒₗₗ des Ultraschallgenerators einen Positionssollwert POSₛₒₗₗ der Sonotrode relativ zum Gegenwerkzeug vorzugeben, und/oder wobei (b) über einen Amplitudenregler ein Leistungs-Istwert Pᵢₛₜ mit einem Leistungs-Sollwert Pₛₒₗₗ des Ultraschallgenerators vergleichbar ist, um zur Einstellung des Leistungs-Sollwerts Pₛₒₗₗ des Ultraschallgenerators dem Ultraschallgenerator einen Amplitudensollwert Aₛₒₗₗ vorzugeben.

Im Unterschied zu der oben beschriebenen Ultraschallbearbeitungsvorrichtung ist hier eine drehbare Sonotrode, vorzugsweise in einer Sonotroden-Walze, gegenüber einem Gegenwerkzeug, wie einem Amboss, oder eine drehbare Walze gegenüber einer vorzugsweise linear verstellbaren Sonotrode angeordnet. Erfindungsgemäß weisen die Sonotroden-Walze oder die drehbare Walze eine nicht-gleichmäßige Umfangsfläche auf, die jeweils die Schweißkontur beim Ultraschallschweißen bilden. Die nicht-gleichmäßige Schweißkontur der Walze oder der drehbaren Sonotroden-Walze, die bspw. durch Quernähte erzeugt wird, führt zu einer variierenden Flächenbelegung der Umfangskontur. Daraus folgt, dass die durch die Sonotrode und den Ultraschallgenerator aufgebrachte Schweißleistung innerhalb einer Umdrehung der Walze oder der Sonotrode variiert. Da die nicht-gleichmäßige Walze oder Sonotrode rotiert, erzeugt die nicht-gleichmäßige Flächenbelegung der Walze oder Sonotrode sich zeitlich periodisch wiederholende Muster in den Zustandsdaten des Ultraschallgenerators. Diese Muster sind auswertbar, um den Betrieb der Ultraschallbearbeitungsvorrichtung zu erfassen und genauer auszuwerten, auszugestalten und im Vergleich zum Stand der Technik präziser durchzuführen.

Gemäß einer bevorzugten Ausführungsform vorliegender Erfindung weist somit die nicht-gleichmäßige Umfangsfläche der Walze oder der Sonotrode mindestens eine erfassbare Kontur auf, die in mindestens einem Datensatz der Mehrzahl von Generatordaten (siehe oben) aufgetragen über einem Zeitsignal mindestens ein sich zeitlich periodisch wiederholendes Muster, vorzugsweise einen Peak, aufgrund einer Drehung der Walze oder der Sonotrode erzeugt. Auf dieser konstruktiven Grundlage ist basierend auf einer Systemzeit des Steuer/Regel-Moduls im Steuer/Regel-Modul eine Winkelgeschwindigkeit des Gegenwerkzeugs, vorzugsweise der Walze, oder der drehbaren Sonotrode ohne einen externen Sensor an der Walze bestimmbar. Wird vorzugsweise und beispielgebend die Leistung des Ultraschallgenerators über eine vollständige Umdrehung der Walze oder drehbaren Sonotrode erfasst, dann führt jede Quernaht oder ungleichmäßige Kontur der nicht-gleichmäßigen Walze oder drehbaren Sonotrode zu einer Erhöhung der durch den Ultraschallgenerator abgegebenen Leistung. Trägt man somit die Leistung des Ultraschallgenerators über einer Systemzeit des Steuer/Regel-Moduls oder über einer anderen Systemzeit auf, dann ergeben sich zeitlich periodisch wiederholende Spitzenwerte in der Leistung des Ultraschallgenerators. Aus den zeitlichen Abständen dieser Spitzenwerte in der Leistung des Ultraschallgenerators lässt sich die Winkelgeschwindigkeit der rotierenden Walze oder der rotierenden Sonotrode und somit auch die Bahngeschwindigkeit des sich durch den Spalt bewegenden Bahnmaterials bestimmen. Während dadurch eine zeiteffiziente Datenauswertung im Steuer/Regel-Modul erfolgt, kann gleichzeitig auf einen externen Sensor zur Erfassung der Winkelgeschwindigkeit der Walze verzichtet werden. In gleicher Weise wird bevorzugt eine andere Größe der oben genannten und erfassten Generatordaten ausgewählt, erfasst und ausgewertet.

Gemäß einer weiteren bevorzugten Ausführungsform vorliegender Erfindung ist das Gegenwerkzeug eine drehbar angeordnete Walze. Die Sonotrode ist gegenüber der Walze verstellbar angeordnet, sodass eine Sollposition POSₛₒₗₗ der Sonotrode mit definiertem Spalt relativ zur Walze über einen Positionssensor erfassbar und mithilfe eines Stellmotors einstellbar ist.

Gemäß einer weiteren bevorzugten Ausführungsform der erfindungsgemäßen Ultraschallbearbeitungsvorrichtung wird ein digitaler Ultraschallgenerator in Kombination mit einem digital arbeitenden Steuer/Regel-Modul eingesetzt. In diesem Zusammenhang ist es ebenfalls bevorzugt, den Amplitudenregler digital vorzusehen. Auf dieser aparativen Grundlage ist mithilfe des Amplitudenreglers innerhalb des Steuer/Regel-Moduls der Leistungs-Istwert Pᵢₛₜ des Ultraschallgenerators anpassbar. Gemäß einer weiteren bevorzugten Ausführungsform der Ultraschallbearbeitungsvorrichtung ist der Amplitudenregler ohne Spaltregler vorgesehen, sodass bei eingestellter Spaltbreite zwischen Walze und Sonotrode oder zwischen drehbarer Sonotrode und Gegenwerkzeug ein Abstand zwischen der Sonotrode und der Walze oder dem Gegenwerkzeug über die Einstellung des Amplitudensollwerts regelbar ist. Zu diesem Zweck ist vorzugsweise die Sonotrode während des Betriebs der Ultraschallbearbeitungsvorrichtung fest anordenbar, sodass eine motorische Positionierung der Sonotrode über einen Positionsaufnehmer nicht erforderlich ist. Natürlich ist es in gleicher Weise bevorzugt, den Spaltregler und den Amplitudenregler in Kombination einzusetzen. Auf dieser Grundlage ist der Leistungs-Sollwert Pₛₒₗₗ des Ultraschallgenerators über eine aktive Spalteinstellung in Kombination mit einer Amplitudeneinstellung der Sonotrode einregelbar.

Gemäß einer weiteren bevorzugten Ausführungsform der Ultraschallbearbeitungsvorrichtung mit nicht-gleichmäßiger Umfangsfläche der Walze wurde oben bereits beschrieben, dass sich aus den zeitlich periodisch wiederholenden Mustern, vorzugsweise Peaks, in mindestens einem Datensatz der Mehrzahl von Generatordaten die Winkelgeschwindigkeit der Walze ohne einen externen Sensor ermitteln lässt. In diesem Zusammenhang hat man ebenfalls erkannt, dass die sich wiederholenden Muster, vorzugsweise Peaks, in mindestens einem Datensatz der Mehrzahl von Generatordaten Bearbeitungszeiten der Ultraschallbearbeitungsvorrichtung repräsentieren. Daher wird das Steuer/Regel-Modul bevorzugt dazu eingesetzt, im zeitlichen Bereich der sich wiederholenden Muster/Peaks diese Bearbeitungszeiten zu erkennen. Da nur im zeitlichen Bereich des sich wiederholenden Musters bzw. Peaks eine Bearbeitung durch die Ultraschallbearbeitungsvorrichtung stattfindet, werden vorzugsweise Auswertevorgänge sowie Steuer- und Regelvorgänge für den Leistungs-Istwert Pᵢₛₜ des Ultraschallgenerators und/oder den Amplitudenistwert Aᵢₛₜ und/oder den Positionssollwert POSₛₒₗₗ nur während der Bearbeitungszeiten durchgeführt. Daher erfasst und verarbeitet man vorzugsweise nur die Daten in den periodisch auftretenden Bearbeitungszeiten. Gemäß einer Ausführungsform werden die Daten oder Messewerte gemittelt. Dadurch schließt man beispielsweise erfassbare Daten außerhalb der Bearbeitungszeiten, also nicht relevante Daten, die auch als Rauschen bezeichnet werden, aus der Datenerfassung und -verarbeitung weitestgehend aus. Auf diese Weise wird die Genauigkeit der Datenerfassung und - verarbeitung gesteigert und die für Steuer- und Regelvorgänge erforderliche Rechenleistung des Steuer/Regel-Moduls wird weiter reduziert. Daher steht freiwerdende Rechenkapazität des Steuer/Regel-Moduls für andere Aufgaben zur Verfügung.

Zur Realisierung einer effizienten Konstruktion der Ultraschallbearbeitungsvorrichtung ist es bevorzugt, den Amplitudenregler ohne Spaltregler vorzusehen, so dass bei eingestellter Spaltbreite zwischen dem Gegenwerkzeug, vorzugsweise eine Walze, und der Sonotrode ein Abstand zwischen der Sonotrode und der Walze über die Einstellung des AmplitudenSollwerts regelbar ist. Es ist zudem bevorzugt, dass die verstellbare Sonotrode oder das verstellbare Gegenwerkzeug während des Betriebs der Ultraschallbearbeitungsvorrichtung fest anordenbar ist, sodass eine motorische Positionierung der Sonotrode oder des Gegenwerkzeugs über einen Positionsaufnehmer nicht erforderlich ist. Gemäß einer weiteren bevorzugten Ausführungsform vorliegender Erfindung sind der Spaltregler und der Amplitudenregler in Kombination einsetzbar sind, sodass der Leistungssollwert des Ultraschallgenerators über eine aktive Spalteinstellung in Kombination mit einer Amplitudeneinstellung der Sonotrode einregelbar ist.

Aufgrund der oben beschriebenen effizienten Konstruktion der Ultraschallbearbeitungsvorrichtung erzielt vorzugsweise der Spaltregler eine Reaktionszeit der Ultraschallbearbeitungsvorrichtung auf Steuer/Regel-Eingriffe des Steuer/Regel-Moduls in einem Bereich < 50 ms, vorzugsweise < 30 ms. Zudem erzielt vorzugsweise der Amplitudenregler aufgrund der oben beschriebenen effizienten Konstruktion der Ultraschallbearbeitungsvorrichtung eine Reaktionszeit der Ultraschallbearbeitungsvorrichtung auf Steuer/Regel-Eingriffe des Steuer/Regel-Moduls in einem Bereich von < 50 ms, vorzugsweise < 40 ms und insbesondere < 20 ms. Die mit vorliegender Erfindung umsetzbaren Reaktionszeiten der Ultraschallbearbeitungsvorrichtung verdeutlichen, dass die Integration des Steuer/Regel-Moduls in die Signalverarbeitung des Ultraschallgenerators deutlich effektiver ist als bekannte extern vom Ultraschallgenerator angeordnete Steuerung für bspw. eine Spaltregelung zwischen Sonotrode und Walze.

Vorliegende Erfindung umfasst zudem ein Ultraschallbearbeitungsverfahren einer Ultraschallbearbeitungsvorrichtung aufweisend einen Ultraschallgenerator, einen Konverter und mindestens eine Sonotrode mit gegenüberliegend angeordnetem Gegenwerkzeug, die um einen Spalt voneinander beabstandet sind, wobei die Sonotrode oder das Gegenwerkzeug drehbar angeordnet ist und eine gleichmäßige oder eine nicht-gleichmäßige Umfangsfläche aufweist, ein Steuer/Regel-Modul, vorzugsweise ein digitales Steuer/Regel-Modul, das in eine Signalverarbeitung des Ultraschallgenerators integriert ist, sodass bezogen auf den Ultraschallgenerator eine Mehrzahl von Generatordaten, insbesondere eine elektrische Spannung U, ein elektrischer Strom I, eine Ist-Amplitude Aᵢₛₜ und/oder eine Ist-Generatorleistung Pᵢₛₜ, im Ultraschallgenerator verarbeitbar ist, wobei das Ultraschallbearbeitungsverfahren die folgenden Schritte umfasst: a) Bestimmen einer Winkelgeschwindigkeit des drehbar angeordneten Gegenwerkzeugs oder der drehbar angeordneten Sonotrode, b) Erfassen mindestens eines Datensatzes aus der Mehrzahl von Generatordaten, c) Vergleichen eines Leistungs-Istwerts Pᵢₛₜ mit einem Leistungs-Sollwert Pₛₒₗₗ des Ultraschallgenerators in einem Spaltregler und Vorgeben eines Positionssollwerts POSₛₒₗₗ der Sonotrode relativ zum Gegenwerkzeug und/oder d) Vergleichen eines Leistungs-Istwerts Pᵢₛₜ mit einem Leistungs-Sollwert Pₛₒₗₗ des Ultraschallgenerators und Vorgeben eines Amplitudensollwerts im Ultraschallgenerator, um den Leistungs-Sollwert Pₛₒₗₗ des Ultraschallgenerators einzustellen.

Die oben beschriebenen erfindungsgemäß bevorzugten Schritte des Ultraschallbearbeitungsverfahrens nehmen auf die Nutzung des ebenfalls oben beschriebenen Spaltreglers und/oder Amplitudenregler Bezug, um die Ist-Leistung des Ultraschallgenerators auf einen vorgegebenen Sollwert einzustellen. In diesem Zusammenhang ist es bevorzugt, die Winkelgeschwindigkeit der gegenüber der Sonotrode angeordneten Walze oder der gegenüber einem Amboss angeordneten drehenden Sonotrode mit einem externen Sensor an der Walze zu erfassen und die erfasste Winkelgeschwindigkeit an den Spaltregler und/oder den Amplitudenregler weiterzuleiten. Alternativ dazu ist es mit einer Walze oder drehbaren Sonotrode mit nicht-gleichmäßiger Umfangsfläche, die mindestens eine erfassbare Kontur aufweist, bevorzugt, mindestens einen Datensatz der Mehrzahl von Generatordaten über eine Mehrzahl von Umdrehungen der Walze zu erfassen, zeitlich periodisch auftretende Muster, insbesondere Peaks, in mindestens einem Datensatz der Mehrzahl von Generatordaten aufgetragen über die Zeit basierend auf einer Systemzeit des Steuer/Regel-Moduls auszuwerten, sodass eine Winkelgeschwindigkeit der Walze ohne externen Sensor bestimmbar ist, und die bestimmte Winkelgeschwindigkeit an den Spaltregler und/oder den Amplitudenregler weiterzuleiten.

Gemäß einer weiteren Ausgestaltung der erfindungsgemäß bevorzugten Ultraschallbearbeitungsverfahren werden Bearbeitungszeiten der Ultraschallbearbeitungsvorrichtung im zeitlich Bereich der periodisch auftretenden Muster oder Peaks bestimmt und das Durchführen von Auswerte- und/oder Steuer- und/oder Regelvorgängen für den Leistungs-Istwert Pᵢₛₜ des Ultraschallgenerators und/oder den Amplitudenistwert Aᵢₛₜ und/oder den Positionssollwert POSₛₒₗₗ auf die oben bestimmten Bearbeitungszeiten oder Bearbeitungszeiträume der Ultraschallbearbeitungsvorrichtung beschränkt.

Gemäß weiterer bevorzugter Ausführungsform des erfindungsgemäßen Ultraschallbearbeitungsverfahrens wird eine Sollposition POSₛₒₗₗ der Sonotrode mit definiertem Spalt relativ zur Walze über einen Positionssensor und einen Stellmotor eingestellt. Es ist des Weiteren bevorzugt, einen festen Spalt zwischen der Sonotrode und der Walze einzustellen, wobei kein Positionssensor mit Stellmotor erforderlich ist. Nachfolgend wird der Leistung-Sollwert Pₛₒₗₗ des Ultraschallgenerators durch Einstellen des Amplituden-Sollwerts Aₛₒₗₗ der Sonotrode eingeregelt. In diesem Zusammenhang ist es ebenfalls bevorzugt, den Leistungs-Sollwert Pₛₒₗₗ des Ultraschallgenerators mithilfe des Spaltreglers und des Amplitudenreglers in Kombination einzuregeln, wobei der LeistungsSollwert Pₛₒₗₗ des Ultraschallgenerators über eine aktive Spalteinstellung in Kombination mit einer Amplitudeneinstellung der Sonotrode einregelbar ist.

Gemäß einer weiteren bevorzugten Ausführungsform des erfindungsgemäßen Ultraschallbearbeitungsverfahrens erfolgt ein Aufschalten einer Vorsteuerfunktion auf den Amplitudenregler und/oder den Positionsregler, sodass eine vorausschauende Amplitudenregelung erfolgt.

Eine weitere bevorzugte Ausführungsform des erfindungsgemäßen Ultraschallbearbeitungsverfahrens umfasst die weiteren Schritte: Bestimmen von Bearbeitungszeiten der Ultraschallbearbeitungsvorrichtung anhand der zeitlich periodisch auftretenden Muster oder Peaks in mindestens einem Datensatz der Mehrzahl von Generatordaten und Aufschalten einer Vorsteuerfunktion auf mindestens eine Stellgröße zu den bestimmten Bearbeitungszeiten, sodass systembedingte zeitliche Verschiebungen oder Störeinflüsse bei der Bearbeitung der Materialbahnen vorausschauend berücksichtigt werden.

### 4. Detaillierte Beschreibung der begleitenden Zeichnungen

Die bevorzugten Ausführungsformen vorliegender Erfindung werden unter Bezugnahme auf die begleitende Zeichnung näher erläutert. Es zeigen:
- Figur 1: eine schematische Darstellung einer bevorzugten Ausführungsform der erfindungsgemäßen Ultraschallbearbeitungsvorrichtung,
- Figur 2: eine schematische Darstellung einer bevorzugten Walze als Gegenwerkzeug der erfindungsgemäßen Ultraschallbearbeitungsvorrichtung mit einer gleichmäßigen Umfangskontur sowie eine damit ultraschallgeschweißte Materialbahn, die vorzugsweise eine Mehrzahl von Materiallagen umfasst,
- Figur 3: eine schematische Darstellung einer bevorzugten Ausführungsform einer Walze als Gegenwerkzeug der Ultraschallbearbeitungsvorrichtung mit einer nicht-gleichmäßigen Umfangskontur sowie eine damit ultraschallgeschweißte Materialbahn, die vorzugsweise eine Mehrzahl von Materiallagen umfasst,
- Figur 4: eine schematische Darstellung der erfassten und auswertbaren Generatordaten des Ultraschallgenerators in Abhängigkeit von der Zeit,
- Figur 5: eine schematische Darstellung einer bevorzugten Ausführungsform der Ultraschallbearbeitungsvorrichtung mit einer Walze mit gleichmäßiger Umfangskontur,
- Figur 6: eine schematische Darstellung einer weiteren bevorzugten Ausführungsform der erfindungsgemäßen Ultraschallbearbeitungsvorrichtung mit einer Walze mit gleichmäßiger Umfangskontur,
- Figur 7: eine schematische Darstellung einer weiteren bevorzugten Ausführungsform der erfindungsgemäßen Ultraschallbearbeitungsvorrichtung mit einer Walze mit nicht-gleichmäßiger Umfangskontur,
- Figur 8: eine schematische Darstellung einer weiteren bevorzugten Ausführungsform einer Ultraschallbearbeitungsvorrichtung mit einer Walze mit nichtgleichmäßiger Umfangskontur und

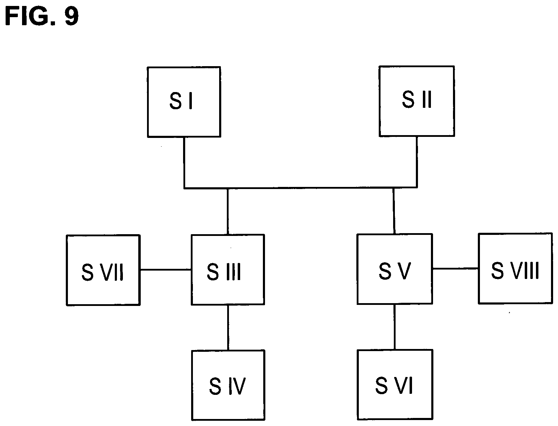

- Figur 9: ein Flussdiagramm einer bevorzugten Ausführungsform des erfindungsgemäßen Ultraschallbearbeitungsverfahrens.

### 5. Detaillierte Beschreibung der bevorzugten Ausführungsformen

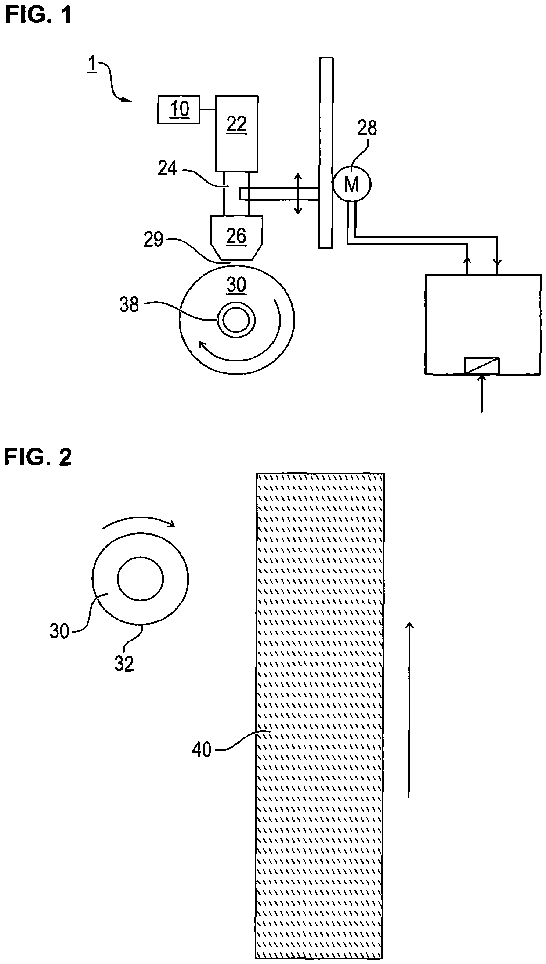

Fig. 1 zeigt den grundsätzlichen Aufbau einer Ultraschallbearbeitungsvorrichtung 1. Die Ultraschallbearbeitungsvorrichtung 1 umfasst einen Ultraschallgenerator 10, einen Konverter 22, einen Booster 24, eine linear bewegbare Sonotrode 26, eine Walze bzw. einen Amboss 30 als Gegenwerkzeug sowie einen Spalt 29, der zwischen der Sonotrode 26 und der Walze 30 gebildet wird.

In Analogie zu dem oben beschriebenen Aufbau der Ultraschallbearbeitungsvorrichtung 1 ist es ebenfalls bevorzugt, eine drehende Sonotrode vorzusehen (nicht gezeigt). Dabei wird mindestens eine Sonotrode innerhalb einer Walze angeordnet. Die Sonotroden-Walze ist um eine Mittelachse drehbar gelagert. Eine Umfangsfläche der Sonotroden-Walze besitzt die Funktion der unten näher erläuterten Umfangsfläche der Walze 30. Um den Spalt zwischen der drehenden Sonotroden-Walze und einem gegenüberliegend angeordneten Amboss einstellen zu können, sind die Sonotroden-Walze und/oder der Amboss (nicht gezeigt) linear bewegbar. Die aus dieser Bewegung resultierende Relativbewegung zwischen Sonotroden-Walze und Amboss gewährleistet eine gezielte Einstellung einer Breite des Spalts zwischen drehender Sonotrode und Amboss.

Im Weiteren werden die bevorzugten Konstruktionen, Funktionen und Bearbeitungsverfahren der Ultraschallbearbeitungsvorrichtung 1 anhand der Ultraschallbearbeitungsvorrichtung 1 erläutert, die in den begleitenden Zeichnungen dargestellt sind. Diese Erläuterungen gelten in gleicher Weise für die nicht gezeigten Ultraschallbearbeitungsvorrichtungen, die beispielsweise eine drehende Sonotroden-Walze und einen Amboss aufweisen.

Der Ultraschallgenerator 10 erzeugt eine hochfrequente elektrische Schwingung aus der zugeführten elektrischen Energie bzw. der elektrischen Versorgungsspannung U_{N}. Die hochfrequente elektrische Schwingung bzw. Energie wird im Konverter oder Schallwandler 22 in eine mechanische Schwingung umgewandelt. Die mechanische Schwingung des Konverters 22 wird vorzugsweise durch den Booster 24 verstärkt und dann an die Sonotrode 26 weitergeleitet. Gegenüber der Sonotrode 26 ist als Gegenwerkzeug die drehbare Walze 30 bzw. der Amboss angeordnet, sodass die Sonotrode 26 und die Walze 30 um den Spalt 29 voneinander beabstandet sind. Aufgrund der drehbaren Anordnung der Walze 30 wird ein zu bearbeitendes Bahnmaterial 40 (nicht gezeigt in Fig. 1) durch den Spalt 29 bewegt und dabei mittels Ultraschall bearbeitet. Die Ultraschallenergie wird über die Sonotrode 26 in das Bahnmaterial 40 eingebracht.

Während des Bearbeitungsvorgangs wird vorzugsweise eine Winkelgeschwindigkeit ω der Walze 30 durch einen Winkelgeschwindigkeitssensor 38 erfasst (Schritt I). Um den Spalt 29 und die Ultraschallbearbeitungsvorrichtung 1 an das Bahnmaterial 40 anpassen zu können, ist die Position der Sonotrode 26 relativ zur Walze 30 über einen Stellmotor 28 mit Positionsaufnehmer oder manuell veränderbar. Anstelle eines elektrischen Stellmotors 28 oder Linearmotors ist ebenfalls ein hydraulisch oder pneumatisch betriebenes Stellglied bevorzugt.

Wie sich aus der obigen Darstellung ergibt, sind mithilfe der Ultraschallbearbeitungsvorrichtung 1 unterschiedliche Bearbeitungsvorgänge realisierbar, wie bspw. das bekannte Ultraschallschweißen, das Ultraschallschneiden und das Ultraschallnähen. Im Folgenden werden Ultraschallbearbeitungsvorgänge ganz allgemein anhand des Beispiels des Ultraschallschweißens beschrieben.

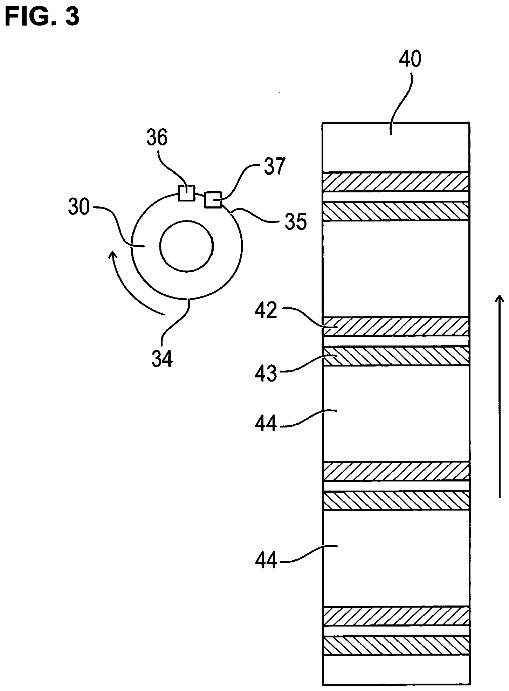

Die Figuren 2 und 3 zeigen schematisch unterschiedliche bevorzugte Konfigurationen der Walze 30. Fig. 2 veranschaulicht eine Walze 30 mit einer gleichmäßigen Umfangsfläche 32. Mit der gleichmäßigen Umfangsfläche 32 wird ein gleichmäßiges Bearbeitungsmuster, vorzugsweise ein Schweißmuster, auf einer ersten Materialbahn 40 erzeugt. Die Materialbahn 40 besteht gemäß einer bevorzugten Ausführungsform vorliegender Erfindung aus einer Mehrzahl von übereinander angeordneten Materiallagen. Eine derart bearbeitete Materialbahn 40 nennt man auch konstante Schweißanwendung oder allgemein konstante Bearbeitungsanwendung. Man bezeichnet derartige kontinuierliche Schweißanwendungen ebenfalls als sogenanntes Flächenschweißen mit nicht unterbrochenen Schweißkonturen.

Hierbei ist die Flächenbelegung der Walze 30 bzw. die Schweißleistung über die komplette Schweißkontur einer Umdrehung der Walze 30 konstant.

Fig. 3 veranschaulicht eine Walze 30 mit einer nicht-gleichmäßigen Umfangsfläche 34. Auf der nicht-gleichmäßigen Umfangsfläche 34 ist mindestens eine erfassbare Kontur 36, 37 vorgesehen, die gegenüber benachbarten Walzenbereichen 35 erhaben ausgebildet ist. Die erfassbare Kontur 36, 37 steht in Richtung der Sonotrode 26 aus der nicht-gleichmäßigen Umfangsfläche 34 vor und verengt während der Drehung der Walze 30 periodisch den Spalt 29. Vorzugsweise verläuft die Kontur 36, 37 quer zur Umfangsrichtung der Walze und wird daher auch als Querkontur 36, 37 bezeichnet. Durch die Drehung der Walze 30 werden die übereinander angeordneten Materiallagen des Bahnmaterials 40 vorzugsweise im Bereich der Konturen 36, 37 verschweißt, sodass sogenannte Quernähte 42, 43 im Bahnmaterial 40 entstehen. Natürlich können die Konturen 36, 37 auch in einem Winkel ungleich 90 ° zur Umfangsrichtung der Walze 30 verlaufen. Zudem ist es bevorzugt, die Konturen 36, 37 kontinuierlich oder diskontinuierlich, also in konstanter oder variierender Höhe, vorzusehen. Da derartige Konturen 36, 37 auch genutzt werden, um krummlinige Muster, Nahtverläufe und Flächen zu verschweißen, wie beispielsweise zur Herstellung von Handschuhen aus Bahnmaterial, weisen die Konturen 36, 37 in Bezug auf die Umfangsrichtung der Walze 30 beliebige Verläufe mit beliebigen Höhenniveaus auf. Daher sind unter dem Begriff "Kontur" diese beliebigen Verläufe von Walzenerhebungen und unter dem Begriff "Quernaht" die mit diesen beliebigen Konturen erzeugten Nähte zu verstehen.

Zwischen den Quernähten 42, 43 der geschweißten Materialbahn sind die Bereiche 44 angeordnet. Im Bereich 44 ist das Bahnmaterial anders, bspw. geringer oder gar nicht, verschweißt als im Bereich der Quernähte 42, 43. Daraus folgt, dass bei einer nicht-gleichmäßigen Schweißkontur 34 der Walze 30 die Flächenbelegung der Walze und somit die Schweißleistung über eine Umdrehung der Walze variiert. Gleichzeitig wird aber mit einer Umdrehung der Walze die Flächenbelegung der Walze vollständig abgearbeitet und das entsprechende Schweißmuster in das Bahnmaterial 40 eingebracht (siehe Fig. 3). Durch die rotatorisch aufgebaute Ultraschallbearbeitungsvorrichtung 1 mit der drehenden Walze 30 ist die Wiederholbarkeit der zwischen Sonotrode 26 und Walze 30 stattfindenden Bearbeitungsvorgänge gegeben, wobei diese Bearbeitungsvorgänge erfassbar sind (siehe unten).

Im Ultraschallgenerator 10 wird elektrische Energie in eine hochfrequente elektrische Schwingung umgewandelt. Zu diesem Zweck umfasst der Ultraschallgenerator 10 ein analoges Leistungsteil 12. Zudem ist aus dem Leistungsteil 12 über eine Signalerfassung 14 eine Mehrzahl von Generatordaten erfassbar. Die Generatordaten umfassen alle oder eine Auswahl folgender Datensätze: elektrische Ultraschallspannung U_{US}, elektrischer Ultraschallstrom I, Amplituden-Istwert Aᵢₛₜ der Ultraschallschwingung und Ultraschallgenerator-Leistungsistwert Pᵢₛₜ.

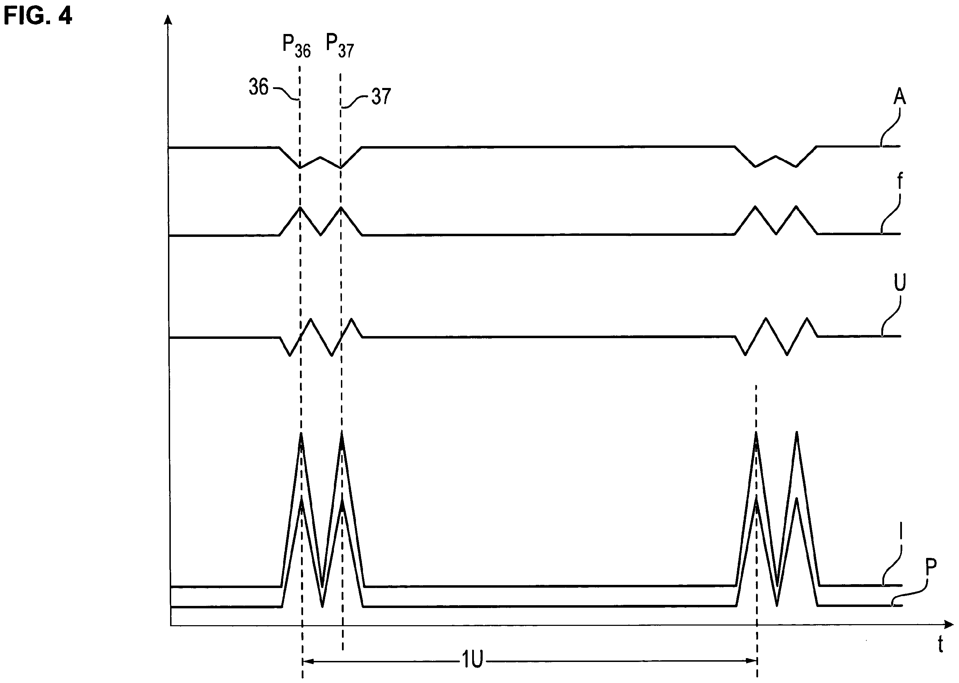

Der Ultraschallgenerator 10 umfasst ebenfalls eine interne Signalverarbeitung 16, vorzugsweise eine digitale Signalverarbeitung, mit der zumindest eine Auswahl der Generatordaten verarbeitbar ist. Die Signalverarbeitung 16 verfügt wie jeder gängige PC oder Industriecomputer über eine Systemzeit bzw. Clock, sodass die Systemzeit als Referenzsignal der Signalverarbeitung 16 zur Verfügung steht. Bisher diente die Signalverarbeitung 16 unter anderem der Steuerung und/oder Regelung der Frequenz des Ultraschallsignals. Beispielsweise wurde eine Steuerelektronik und -software dazu verwendet, die Ultraschallfrequenz auf die Resonanzfrequenz der Ultraschallbearbeitungsvorrichtung einzuregeln. Mithilfe der Signalerfassung 14 und Signalverarbeitung 16 sind die Generatordaten in Abhängigkeit von der Zeit erfassbar und auswertbar. Diese Auswertung, die nicht zwangsläufig eine Darstellung erfordert, ist qualitativ für ein Ultraschallschweißverfahren mit einer Walze 30 mit nicht-gleichmäßiger Umfangsfläche 34 in Fig. 4 veranschaulicht. Die Drehung der Walze 30 mit einer oder einer Mehrzahl von Konturen 36, 37, hier vorzugsweise zwei Querkonturen, erzeugt in den Generatordaten sich zeitlich periodisch wiederholende Peaks P₃₆ und P₃₇. Pro Umdrehung der Walze 30 entsteht ein Peak P₃₆, P₃₇ pro Kontur 36, 37. Somit signalisiert der zeitliche Abstand zwischen zwei gleichen Peaks P₃₆ oder P₃₇ eine vollständige Umdrehung U der Walze 30. Bewegt sich bspw. die Querkontur 36 an der Sonotrode 26 vorbei und verengt den Spalt 29, findet eine Ultraschallbearbeitung, vorzugsweise ein Ultraschallschweißen des Bahnmaterials im Bereich der Querkontur 36 statt. In diesem sich periodisch mit jeder Umdrehung U der Walze 30 wiederholenden zeitlichen Bereich sinkt die Ultraschallamplitude A kurzzeitig ab. Gleichzeitig steigen die Ultraschallfrequenz f, der Ultraschallstrom I und die Ultraschallgeneratorleistung P an, wie anhand der positiven und negativen Peaks in Fig. 4 zu erkennen ist. Die Ultraschallspannung U_{US} zeigt ebenfalls im zeitlichen Bearbeitungsbereich der Querkontur 36 eine Signalschwankung, die erkennbar zeitlich periodisch wiederkehrt. Somit zeigen die in Abhängigkeit von der Zeit erfassten Daten typische und zeitlich periodisch wiederkehrende Muster in den zeitlichen Abschnitten der Ultraschallbearbeitung der Materialbahn 40 durch die nicht-gleichmäßige Umfangsfläche 34 der Walze 30 der Ultraschallbearbeitungsvorrichtung 1. Diese wiederkehrenden Muster weisen bevorzugt die Form von positiven oder negativen Peaks oder von charakteristischen Schwankungen aufgetragen gegenüber der Zeit auf. Diese Muster sind mit Hilfe eines Filters (nicht gezeigt) oder einer anderen geeigneten Auswerteelektronik automatisch erfassbar. Basierend darauf sind vorzugsweise der Zeitpunkt oder die Zeitspanne des jeweiligen Musters und der zeitliche Abstand zwischen direkt und mehrfach aufeinander folgenden gleichartigen und ungleichartigen Mustern bestimmbar. Gleichartige Muster beschreiben eine Signalschwankung derselben physikalischen Größe, wie bspw. die Ultraschallspannung U_{US}, ausgelöst durch dieselbe Kontur 36 oder 37.Ungleichartige Muster beschreiben Signalschwankungen derselben physikalischen Größe aber ausgelöst durch unterschiedliche Konturen 36; 37 auf der Walze 30.

Somit ist aus einem oder einer Mehrzahl von Datensätzen der Generatordaten erkennbar, wann und über welche Zeitspanne Bahnmaterial im Spalt 29 bearbeitet wird. Zudem ist aus dem zeitlichen Abstand von zwei gleichen Peaks oder Mustern, bspw. P₃₆ oder P'₃₆, erkennbar, in welcher Zeit eine Umdrehung U der Walze 30 abgeschlossen ist. Auf dieser Grundlage bestimmt vorzugsweise ein Steuer/Regelmodul 50 (siehe unten) oder die Signalverarbeitung 16 die aktuelle Winkelgeschwindigkeit ω der Walze 30 aus dem zeitlichen Abstand von zwei aufeinanderfolgenden gleichartigen Mustern, die durch dieselbe Querkontur 36; 37 hervorgerufen worden sind (Schritt II). Im Speziellen wird ein Winkelsegment vom 360 ° durch den bestimmten zeitlichen Abstand dividiert. Es ist ebenfalls bevorzugt, die Anzahl der erfassten Umdrehungen U durch die dafür benötigte Zeit zu dividieren, um die Umdrehungsgeschwindigkeit der Walze 30 zur Nutzung in weiteren bevorzugten Verarbeitungsschritten zu erhalten. Des Weiteren ist es bevorzugt, den zeitlichen Abstand von zwei aufeinanderfolgenden und ungleichartigen Mustern zu bestimmen, die durch unterschiedliche Querkonturen 36, 37 hervorgerufen worden sind. Da die Konstruktion der Walze 30 und somit auch das Winkelsegment zwischen den Querkonturen 36, 37 bekannt ist, ist aus dem Quotient des Winkelsegments zwischen den Querkonturen 36, 37 und dem erfassten zeitlichen Abstand ebenfalls die Winkelgeschwindigkeit der Walze 30 bestimmbar.

Der Ultraschallgenerator 10 umfasst des Weiteren das Steuer/Regel-Modul 50, das in die Signalverarbeitung 16 des Ultraschallgenerators 10 integriert ist. Vorzugsweise sind die Signalverarbeitung 16 und das Steuer/Regel-Modul 50 digital realisiert. Zwar ist bei einem bevorzugten analogen Leistungsteil 12 ein analog-digital (A/D) Wandler zur Übertragung der erfassten analogen Generatordaten zur digitalen Signalverarbeitung 16 und zum Steuer/Regel-Modul 50 erforderlich, insgesamt realisiert aber die digitale Umsetzung der Signalverarbeitung 16 und des Steuer/Regel-Moduls 50 eine schnellere Datenverarbeitung im Vergleich zu bekannten Systemen.

Ein weiterer Vorteil der Integration des Steuer/Regel-Moduls 50 in die Signalverarbeitung 16 des Ultraschallgenerators 10 besteht darin, dass ohne lange Übertragungswege und damit verbundene Zeitverluste vorzugsweise alle oder eine Auswahl an Generatordaten in Echtzeit dem Steuer/Regel-Modul 50 zur Verfügung stehen. Dies ermöglicht schnellere und genauere Regelvorgänge und daher konstantere und verglichen zum Stand der Technik bessere Ultraschallschweißverbindungen. Denn vorzugsweise erfasst und übermittelt die Signalerfassung 14 eine Auswahl oder alle der oben genannten Generatordaten des Ultraschallgenerators 10 innerhalb einer Zeitspanne von 1 bis 100 µs, vorzugsweise in weniger als 80 µs und weiter bevorzugt in weniger als 50 µs, an die Signalverarbeitung 16 und insbesondere an das Steuer/Regel-Modul 50 mit Spaltregler 60 und Amplitudenregler 70 (siehe oben). In bekannten Systemen wurden Generatordaten einer externen Steuerung zur Verfügung gestellt. Die Übertragung der Generatordaten erfolgte teilweise über mehrere A/D- und D/A-Wandler mit Wandelzeiten von bis zu 10 ms. In der Ultraschallgeneratorexternen Steuerung des Standes der Technik fanden Datenverarbeitungsvorgänge im Bereich von 5-50 ms statt. Die nachfolgende Übertragung der Steuersignale bspw. zur Positionierung der Sonotrode erforderte weitere 5-10 ms. Insgesamt ergeben sich daraus nachteilige Reaktionszeiten einzelner Komponenten sowie der gesamten Ultraschallbearbeitungsvorrichtung des Standes der Technik, so dass eine Reaktion auf unerwünschte Verarbeitungssituationen im Vergleich zu vorliegender Erfindung nur langsam erfolgen kann.

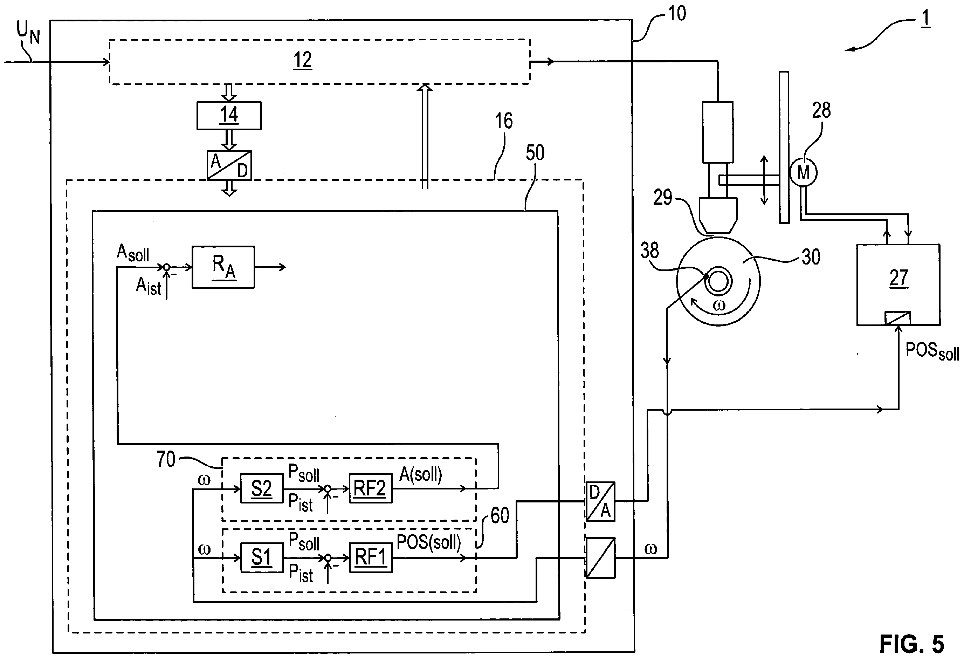

Figur 5 zeigt ein schematisches Blockschaltbild einer bevorzugten Ausführungsform der erfindungsgemäßen Ultraschallbearbeitungsvorrichtung 1. Die Ultraschallbearbeitungsvorrichtung 1 arbeitet mit einer Walze 30, die eine gleichmäßige Umfangsfläche 32 (siehe oben) aufweist. Zudem ist die Walze 30 mit dem Winkelgeschwindigkeitssensor 38 ausgestattet, der die Winkelgeschwindigkeit ω der Walze 30 erfasst und an das integrierte Steuer/Regel-Modul 50 übermittelt. Zudem umfasst die Ultraschallbearbeitungsvorrichtung 1, hier vorzugsweise eine Ultraschallschweißvorrichtung, den Stellmotor 28 mit Positionsaufnehmer zur Einstellung der Sonotrodenposition und somit der Breite des Spalts 29. Der Stellmotor 28 ist mit einem Positionsregler 27 verbunden, der eine Sollposition POSₛₒₗₗ der Sonotrode 26 vom Steuer/Regel-Modul 50 erhält und diese Sollposition POSₛₒₗₗ über den Stellmotor 28 einregelt.

Das integrierte Steuer/Regel-Modul 50 umfasst einen Spaltregler 60 und einen Amplitudenregler 70, die vorzugsweise einen PID-Regler umfassen. Beide Regler 60, 70 dienen der Regelung des Energieeintrags in die Materialbahn, die über die Drehung der Walze 30 durch den Spalt 29 bewegt wird. Der Spaltregler 60 und der Amplitudenregler 70 sind vorzugsweise einzeln oder in Kombination einsetzbar. Zu diesem Zweck bestimmt der Spaltregler 60 eine Sollposition POSₛₒₗₗ der Sonotrode 26 relativ zur Walze 30 (Schritt III), um einen Leistungs-Istwert Pᵢₛₜ des Ultraschallgenerators 10 an einen vorgegebenen Leistungssollwert Pₛₒₗₗ des Ultraschallgenerators 10 anzupassen. Diese Sollposition POSₛₒₗₗ wird vorzugsweise über einen digital/analog (D/A) Wandler oder über einen Feldbus an den Positionsregler 27 der Sonotrode 26 übermittelt. Der Positionsregler 27 regelt dann die Sollposition POSₛₒₗₗ der Sonotrode 26 ein, während er über den Positionsaufnehmer die Istposition der Sonotrode 26 zum Vergleich heranzieht (Schritt IV).

Zur Bestimmung der Sollposition POSₛₒₗₗ der Sonotrode 26 erhält der Spaltregler 60 zunächst die Winkelgeschwindigkeit ω der Walze 30 vom Winkelgeschwindigkeitssensor 38. Es ist ebenfalls bevorzugt, dass der Winkelgeschwindigkeitssensor 38 ein Referenzsignal für die Winkelgeschwindigkeit ω der Walze 30 an das Steuer/Regel-Modul 50 übermittelt, welches dann vom Steuer/Regel-Modul 50 in eine Winkelgeschwindigkeit ω der Walze 30 umgerechnet wird. Die ermittelte Winkelgeschwindigkeit ω der Walze 30 wird an einen Speicher S1 des Spaltreglers 60 weitergeleitet. Im Speicher S1 ist eine eingelernte Kennlinie und/oder eine Kennwerttabelle und/oder eine Mehrzahl von geteachten Kennwerten hinterlegt, die allein oder in Kombination für das im Spalt 29 bearbeitete Material die Soll-Leistung Pₛₒₗₗ des Ultraschallgenerators 10 in Abhängigkeit von der Winkelgeschwindigkeit ω der Walze 30 vorgeben. Die auf diese Weise ermittelte SollLeistung Pₛₒₗₗ des Ultraschallgenerators 10 wird mit der gerade wirkenden Ist-Leistung Pᵢₛₜ des Ultraschallgenerators 10 verglichen, die dem Spaltregler 60 von der Signalerfassung 14 übermittelt worden ist. Vorzugsweise übermittelt die Signalerfassung 14 die Ist-Leistung Pᵢₛₜ des Ultraschallgenerators 10 innerhalb einer Zeitspanne von 1 bis 100 µs, weiter bevorzugt in weniger als 80 µs und noch mehr bevorzugt in weniger als 50 µs, an das Steuer/Regel-Modul 50 mit Spaltregler 60 und Amplitudenregler 70. Im Spaltregler 60 findet eine Verarbeitung der vorliegenden Daten in einer bevorzugten Zeitspanne von 1 bis 100 µs, vorzugsweise in weniger als 80 µs und weiter bevorzugt in weniger als 50 µs, statt.

Das Ergebnis dieses Vergleichs von Soll-Leistung Pₛₒₗₗ und Ist-Leistung Pᵢₛₜ des Ultraschallgenerators 10 im Spaltregler 60 wird an den Regler RS1 übermittelt, der entsprechend eine Sollposition POSₛₒₗₗ der Sonotrode 26 und somit eine Breite des Spalts 26 vorgibt. Die Sollposition POSₛₒₗₗ der Sonotrode wird an den Positionsregler 27 übermittelt und umgesetzt, wodurch die Ist-Leistung Pᵢₛₜ des Ultraschallgenerators 10 auf die Sollleistung Pₛₒₗₗ geregelt wird. Erfindungsgemäß bevorzugt erfolgt die Übertragung der Sollposition POSₛₒₗₗ an den Positionsregler 27 in einer Zeitspanne von 1 bis 10 ms, vorzugsweise in weniger als 5 ms, noch mehr bevorzugt in weniger als 2 ms. Der Positionsregler 27 setzt die vorgegebene Sollposition POSₛₒₗₗ bzw. Spaltbreite vorzugsweise innerhalb von 20 bis 50 ms um, wenn er mit einem elektrischen Servomotor realisiert ist. Ist der Positionsregler 27 gemäß einer weiteren bevorzugten Ausführungsform mit einem pneumatischen Stellsystem realisiert, wird die vorgegeben Sollposition POSₛₒₗₗ innerhalb von 50 bis 500 ms umgesetzt.

Der Amplitudenregler 70 verändert gezielt die Amplitude A des Ultraschallsignals. Dadurch wird bei feststehender Sonotrode 26 der Energieeintrag in das Bahnmaterial im Spalt 29 gezielt erhöht, wenn die Amplitude A vergrößert wird, oder erniedrigt, wenn die Amplitude A verkleinert wird. Einem Speicher S2 des Amplitudenreglers 70 wird ebenfalls die Winkelgeschwindigkeit ω der Walze 30 von dem Winkelgeschwindigkeitssensor 38 (siehe oben) zugeführt. Dies läuft in analoger Weise wie beim Spaltregler 60 ab. Im Speicher S2 sind Kennlinien und/oder Kennwerttabellen und/oder geteachte bzw. eingelernte Werte bezüglich des bearbeiteten Bahnmaterials für die Leistung des Ultraschallgenerators 10 in Abhängigkeit von der Drehung, insbesondere der Winkelgeschwindigkeit ω, der Walze 30 hinterlegt. Mithilfe der Winkelgeschwindigkeit ω und der Spezifikation des bearbeiteten Materials ist dem Speicher S2 ein Sollwert Pₛₒₗₗ für die Leistung des Ultraschallgenerators 10 entnehmbar (Schritt V). Dieser Sollwert Pₛₒₗₗ der Generatorleistung wird mit der von der Signalerfassung 14 erhaltenen Ist-Leistung Pᵢₛₜ des Ultraschallgenerators 10 verglichen. Das Ergebnis des Vergleichs wird im Regler oder Filter RF2 in einen Amplituden-Sollwert Aₛₒₗₗ umgerechnet, um über die Veränderung der Amplitude A des Ultraschallsignals den gewünschten Leistungseintrag Pₛₒₗₗ des Ultraschallgenerators 10 in das Bahnmaterial im Spalt 29 zu erzielen. Vorzugsweise übermittelt die Signalerfassung 14 die Ist-Leistung Pᵢₛₜ des Ultraschallgenerators 10 innerhalb einer Zeitspanne von 1 bis 100 µs, vorzugsweise in weniger als 80 µs und weiter bevorzugt in weniger als 50 µs, an das Steuer/Regel-Modul 50 mit Amplitudenregler 70. Im Amplitudenregler 70 findet eine Verarbeitung der vorliegenden Daten in einer bevorzugten Zeitspanne von 1 bis 100 µs, vorzugsweise in weniger als 80 µs und weiter bevorzugt in weniger als 50 µs, statt.

Der Amplituden-Sollwert Aₛₒₗₗ wird an den Regler R_{A} übermittelt. Dort wird anhand eines Vergleichs des Amplituden-Istwerts Aᵢₛₜ und des Amplituden-Sollwerts Aₛₒₗₗ die Veränderung der Amplitude A bestimmt (Schritt VI). Gemäß einer bevorzugten Ausführungsform vorliegender Erfindung wird der auf diese Weise ermittelte Regelungseingriff für die Amplitude elektronisch umgesetzt und die entsprechenden Steuersignale werden an das Leistungsteil 12 übertragen (siehe Pfeil in den Fig. 5 - 8).

Erfindungsgemäß bevorzugt erfolgt die Übermittlung an den Regler R_{A} innerhalb von 1 bis 100 µs, vorzugsweise in weniger als 80 µs und weiter bevorzugt in weniger als 50 µs. Die Verarbeitung der Sollamplitude Aₛₒₗₗ im Regler R_{A} zur Umsetzung in die Istamplitude Aᵢₛₜ an der Sonotrode 26 wird bevorzugt in einer Zeitspanne von 1 bis 10 ms, vorzugsweise in weniger als 8 ms, noch mehr bevorzugt in weniger als 5 ms, realisiert.

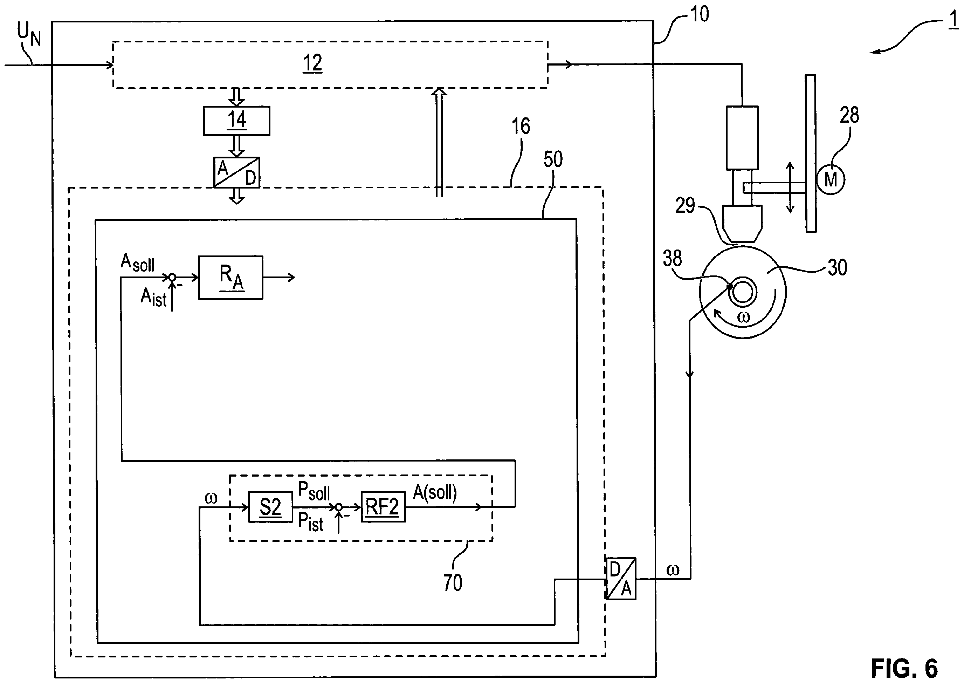

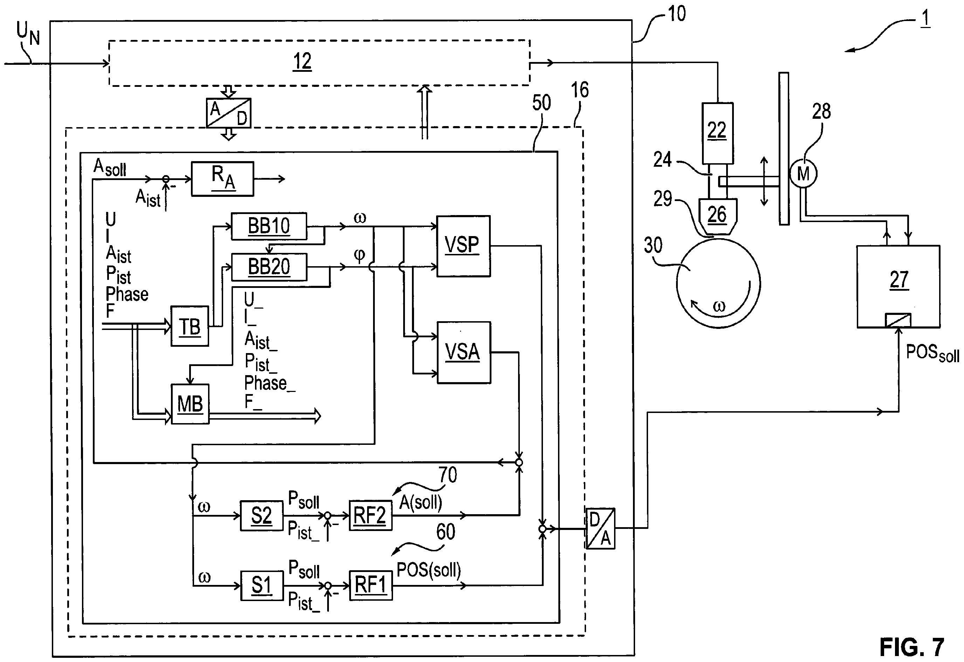

Es ist ebenfalls bevorzugt, die Ultraschallbearbeitungsvorrichtung 1 nur mithilfe des Amplitudenreglers 70 zu regeln. Diese bevorzugte Ausführungsform ist schematisch in Figur 6 dargestellt. Man kann erkennen, dass der Spaltregler 60 weggelassen worden ist. Entsprechend ist die Sonotrode 26 auch nicht über einen Positionsregler 27 positionierbar. Vielmehr wird bevorzugt eine definierte Position der Sonotrode 26 oder eine definierte Breite des Spalts 29 zwischen Walze 30 und Sonotrode 26 mithilfe des Motors 28 oder mit einem ähnlichen Stellglied (siehe oben) angefahren und gehalten. Dabei kann optional die Position der Sonotrode 26 mit einem Positionsaufnehmer erfasst und kontrolliert werden. Es ist ebenfalls bevorzugt, die Sonotrode 26 gegen einen Festanschlag zu fahren, sodass die Position der Sonotrode 26 fixiert ist. Gemäß einer anderen Ausführungsform ist die Sonotrode 26 manuell verstellbar und an einer bestimmten Position fixierbar. Sobald die Sonotrode 26 an der vorbestimmten Position angeordnet worden ist, wird über den Amplitudenregler 70 gemäß oben beschriebener Arbeitsweise die Ist-Leistung Pᵢₛₜ des Ultraschallgenerators 10 auf die Soll-Leistung Pₛₒₗₗ des Ultraschallgenerators 10 mithilfe der Variation der Amplitude der Ultraschallschwingung geregelt. Gemäß einer weiteren bevorzugten Ausführungsform der Ultraschallbearbeitungsvorrichtung 1 (vgl. Fig. 7) ermittelt das interne Steuer/Regel-Modul 50 die Winkelgeschwindigkeit ω der Walze 30 aus mindestens einem Datensatz der oben beschriebenen Generatordaten (vgl. Fig. 4). Die Ultraschallbearbeitungsvorrichtung 1 umfasst in diesem Fall eine Walze 30 mit einer nicht-gleichmäßigen Umfangskontur 34. Daher beeinflussen erfassbare Konturen 36, 37 den zeitlichen Verlauf der Generatordaten (siehe oben). Die Winkelgeschwindigkeit ω ist aus dem zeitlichen Verlauf der einzelnen Generatordaten ableitbar, die in Fig. 4 veranschaulicht sind. Zu diesem Zweck wird ein Datensatz, eine Auswahl von Datensätzen oder es werden alle Datensätze der Generatordaten an einen Triggerblock TB übermittelt. Im Triggerblock TB werden die zeitabhängig erfassten Datensätze der Generatordaten gemäß Fig. 4 ausgewertet. Die Auswertung bestimmt, an welchen zeitlichen Positionen positive oder negative Peaks P₃₆, P₃₇ oder sich wiederholende Muster bzw. Signalschwankungen liegen. Basierend auf üblichen Verarbeitungsgeschwindigkeiten der Materialbahn 40 und der damit verbundenen Winkelgeschwindigkeit ω der Walze 30 wiederholen sich die Peaks P₃₆, P₃₇ oder Muster in Abhängigkeit von der jeweiligen Anwendung vorzugsweise 2 bis 80 mal pro Sekunde, vorzugsweise 2 bis 50 mal und weiter bevorzugt 2 bis 20 mal pro Sekunde. Da sich die Walze 30 während des Betriebs für längere Bearbeitungszeiträume von mehreren Stunden bis zu mehreren Tagen mit konstanter Drehzahl dreht, wiederholen sich die Peaks P₃₆, P₃₇ in regelmäßigen zeitlichen Abständen. Diese regelmäßigen zeitlichen Abstände entsprechen jeweils einer vollständigen Umdrehung U der Walze 30, währenddessen die erfassbaren Konturen 36, 37 der nicht-gleichmäßigen Umfangskontur 32 jeweils einmal die Sonotrode 26 passieren. Der Triggerblock TB bestimmt die Zeitspanne, vorzugsweise den Zeitpunkt, zudem die erfassbaren Konturen 36, 37 die Sonotrode 26 passieren. In dieser Zeitspanne oder in diesem Zeitpunkt wird die Materialbahn 40 bearbeitet, bevorzugt geschweißt. Das Zeitsignal, das als Referenz dient, wird bevorzugt durch die Systemzeit des Steuer/Regel-Moduls 50 oder der Signalverarbeitung 16 bereitgestellt. Daher ist aus der Auswertung des Triggerblocks TB bekannt, mit welchem zeitlichen Abstand eine sich periodisch wiederholende Bearbeitung stattfindet, wie lange die Bearbeitung dauert sowie wann mit Bezug auf die Systemzeit eine Bearbeitung stattfindet, wenn man die zeitliche Position der ersten Peaks P₃₆, P₃₇ der erfassbaren Konturen 36, 37 kennt. Daraus folgt, dass mithilfe des Triggerblocks TB dem Steuer/Regel-Modul 50 die Information zur Verfügung steht, in welchen konkreten Zeitspannen als zeitliche Bruchteile oder als Winkelsegment oder als Winkelpositionssegment einer Umdrehung U der Walze 30 tatsächlich nur eine Bearbeitung der Materialbahn stattfindet.

Aus den Daten des Triggerblocks TB ermittelt ein Bearbeitungsblock BB10 die Winkelgeschwindigkeit ω der Walze 30. Dazu dividiert bevorzugt der Bearbeitungsblock BB10 den Drehwinkel einer Umdrehung, d. h. 360 °, durch die Zeit pro Umdrehung U. Zur Steigerung der Genauigkeit kann bevorzugt auch der Drehwinkel mehrerer Umdrehungen U durch die dafür benötigte Zeit dividiert werden. Die ermittelte Winkelgeschwindigkeit ω wird dann an den Amplitudenregler 70 und/oder den Spaltregler 60 übermittelt. In einem weiteren bevorzugten Bearbeitungsblock BB20 wird eine jeweilige Winkelposition der erfassbaren Konturen 36, 37 bestimmt. Ausgehend von einer zeitlichen Referenzposition, bspw. wo bevorzugt die erfassbaren Konturen 36, 37 erstmals die Sonotrode 26 passieren, wird die Zeit gemessen. Mithilfe der Winkelgeschwindigkeit ω des Bearbeitungsblocks BB10 und der gemessenen Zeit ist jederzeit bestimmbar, an welcher Winkelposition ϕ sich die jeweils erfassbare Kontur 36, 37 gerade befindet.

Vorzugsweise wird die Winkelposition ϕ in einem Messwerterfassungsblock MB genutzt. In bekannten Systemen wurden die ermittelten Generatordaten über eine Umdrehung U der Walze 30 gemittelt. Dabei findet eine störende Überlagerung der Signale an den Peaks P₃₆, P₃₇ oder Mustern- also der Signale während der zeitlichen Bearbeitungsvorgänge der Materialbahn - durch die Signale während der Nicht-Bearbeitungsvorgänge statt - also wenn die Materialbahn nicht oder gering mit Ultraschallenergie beaufschlagt wird. Da mithilfe des Bearbeitungsblocks BB20 klar erkennbar und erfassbar ist, in welchen Zeiträumen tatsächlich eine Bearbeitung der Materialbahn 40 stattfindet, bestimmt der Messwerterfassungsblock MB auch nur in diesen Bearbeitungszeiträumen die erfassten Generatordaten oder eine Auswahl davon. Auf diese Weise werden die Generatordaten nicht durch das Signalrauschen in den Nicht-Bearbeitungszeiträumen überlagert, so dass eine höhere Genauigkeit der Generatordaten verglichen mit herkömmlichen Systemen erzielt wird.

Gemäß einer bevorzugten Ausführungsform vorliegender Erfindung wird zudem im Messwerterfassungsblock MB ein Mittelwert der sich aufgrund der Rotation der Walze 30 wiederholenden und erfassten Generatordaten oder einer Auswahl davon gebildet. Daraus ergibt sich eine höhere Genauigkeit der ausgewerteten Generatordaten, was gleichzeitig darauf aufbauende Regel- oder Steuervorgänge mit höherer Genauigkeit ermöglicht. Dadurch wird vorzugsweise die Ist-Leistung Pᵢₛₜ des Ultraschallgenerators 10 genauer bestimmbar, die dann dem Spaltregler 60 und/oder dem Amplitudenregler 70 zugeführt wird. Es wird somit bevorzugt die Leerlaufleistung der Ultraschallbearbeitungsvorrichtung 1 in Bereichen außerhalb der Konturen 36, 37 ausgeblendet, was die Genauigkeit des ermittelten Leistungsmittelwerts steigert. Zudem erfolgt nur im Bereich der Peaks P₃₆, P₃₇ eine Datenauswertung und nicht über die gesamte Umdrehung der Walze 30. Dies reduziert den Auswerteaufwand und damit verbundene Rechenleistung.

Basierend auf der Auswertung der Generatordaten im Steuer/Regel-Modul 50 stehen die über den Messwerterfassungsblock MB ermittelten Daten innerhalb einer Zeitspanne von 1 bis 100 µs, vorzugsweise in weniger als 80 µs und weiter bevorzugt in weniger als 50 µs, der weiteren Verarbeitung und Nutzung zur Verfügung. Entsprechend ergeben sich aus der bevorzugten Kombination der Generatordatenbereitstellung durch den Messwerterfassungsblock MB mit dem Spaltregler 60 vorzugsweise Reaktionszeiten der Ultraschallbearbeitungsvorrichtung 1 mit Spaltregler 60 im zeitlichen Bereich von 20 bis 60 ms mit Servomotor und von 50 bis 500 ms mit einem pneumatischen Stellsystem. Für die bevorzugte Kombination der Generatordatenbereitstellung durch den Messwerterfassungsblock MB mit dem Amplitudenregler 70 ergeben sich bevorzugt Reaktionszeiten der Ultraschallbearbeitungsvorrichtung im Bereich von 1 bis 10 ms, vorzugsweise weniger als 8 ms und weiter bevorzugt weniger als 5 ms.

Des Weiteren werden bevorzugt die Winkelgeschwindigkeit ω und die Winkelposition ϕ an die Blöcke VSP und VSA weitergeleitet. Im Block VSP findet eine Vorsteuerung zur Bestimmung der Sollposition POSₛₒₗₗ der Sonotrode 26 statt. Im Block VSA findet eine Vorsteuerung zur Bestimmung der Sollamplitude Aₛₒₗₗ des Ultraschallsignals statt. Die Funktion "Vorsteuerung" fügt einer oder verschiedenen Stellgrößen der Ultraschallbearbeitungsvorrichtung 1, wie vorzugsweise der Sollamplitude Aₛₒₗₗ (Schritt VIII) und/oder der Sollposition POSₛₒₗₗ (Schritt VII) der Sonotrode 26, Vorsteuerwerte hinzu, um proaktiv oder vorausschauend den Ultraschallbearbeitungprozess für eine gesteigerte Qualität und/oder Verlässlichkeit zu beeinflussen. Die Vorsteuerwerte für die Sollposition POSₛₒₗₗ sind im Block VSP und die für die Sollamplitude Aₛₒₗₗ sind im Block VSA hinterlegt. Da es sich bei der Ultraschallbearbeitungsvorrichtung 1 um ein drehendes System und daher um einen sich mit jeder Umdrehung der Walze 30 periodisch wiederholenden Bearbeitungsprozess handelt, sind die Vorsteuerwerte vorzugsweise als Funktion der Winkelposition ϕ der Walze 30 hinterlegt. Dies ist ebenfalls bevorzugt eine lineare oder eine nichtlineare mathematische Funktion, die in Abhängigkeit von den Parametern Winkelgeschwindigkeit ω und/oder Drehwinkel p ausgedrückt werden kann. Gemäß einer weiteren bevorzugten Ausführungsform vorliegender Erfindung sind die Vorsteuerwerte in Form einer Kennlinie oder in Form eines Kennfelds abgespeichert. Vorzugsweise ist das Kennfeld abhängig von der Winkelposition ϕ und der Winkelgeschwindigkeit ω der Walze 30. Es ist ebenfalls bevorzugt, dieses Kennfeld parametrisiert abzulegen und/oder den Blöcken VSA und VSP während des Betriebs der Ultraschallbearbeitungsvorrichtung 1 einzulernen.

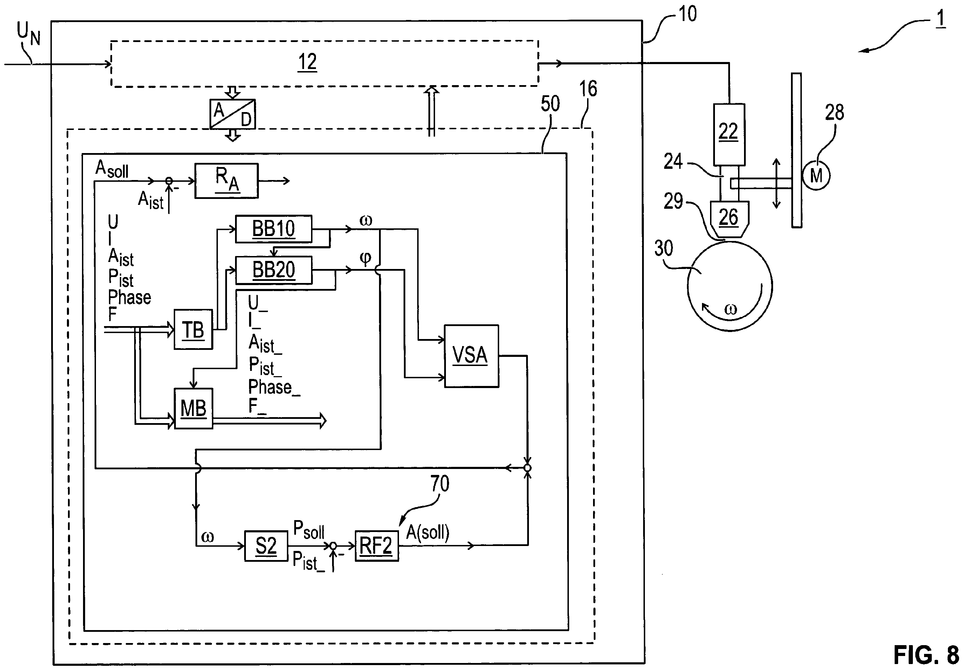

Basierend auf den abgelegten Vorsteuerwerten als Funktion oder Kennfeld wird während des Betriebs der Ultraschallbearbeitungsvorrichtung permanent die Funktion der Vorsteuerwerte berechnet und/oder das Kennfeld bzw. die Kennfelder in Abhängigkeit von der Winkelposition ϕ und/oder der Winkelgeschwindigkeit ω der Walze 30 ausgelesen. Die vorliegenden Vorsteuerwerte werden dann dem entsprechenden Stellglied, hier dem Positionsregler 60 und dem Amplitudenregler 70, aufgeschaltet, wie in den Fig. 7 und 8 dargestellt ist. Um die Vorsteuerwerte in den zeitlichen Ablauf der Regelung der Ultraschallbearbeitungsvorrichtung 1 integrieren zu können, ist eine entsprechende Rechenleistung erforderlich, die durch den Ultraschallgenerator 1 und das integrierte Steuer/Regel-Modul 50 gewährleistet ist.

Des Weiteren ist es bevorzugt, dass das Steuer/Regel-Modul 50 des Ultraschallgenerators 10 an die Ultraschallbearbeitung angepasste kurze Zykluszeiten zum Auslesen des Kennfelds oder zum Berechnen der Funktion gewährleistet. Dies stellt sicher, dass das Kennfeld entsprechend häufig pro Umdrehung der Walze 30 ausgelesen und/oder die Funktion entsprechend häufig pro Umdrehung der Walze 30 berechnet werden kann. Auf diese Weise ist der Ultraschallbearbeitungsprozess optimierbar und eine bessere Genauigkeit und Qualität im Vergleich zum Stand der Technik realisierbar. Gemäß einer bevorzugten Ausführungsform vorliegender Erfindung erfolgt eine Vorsteuerung mit einer Genauigkeit von 10^{-1o} des Drehwinkels der Walze 30. Dauert eine volle Umdrehung der Walze 30 200 ms, so ergibt sich eine Zykluszeit der Blöcke VSA und VSP zum Berechnen der Funktion und/oder zum Auslesen des Kennfelds von maximal 55 µs. Entsprechend sind auch andere Genauigkeiten einstellbar.

Zur Beschleunigung der Bestimmung der Vorsteuerwerte ist es bevorzugt, dass die Vorsteuer-Funktion und das Kennfeld parametrisiert sind. Das bedeutet, dass die Funktion und das die Werte des Kennfelds jeweils als mathematische Ausdrücke definiert sind, die von den Parametern Winkelposition ϕ und/oder der Winkelgeschwindigkeit ω der Walze 30 abhängig sind.

Die Vorsteuerung entfaltet eine proaktive bzw. vorausschauende Wirkung, die bevorzugt beim Ultraschallschweißen aufeinanderfolgender Quernähte genutzt wird. Mit Hilfe der Vorsteuerung wird der eingangs erwähnten negativen Reaktionskraft des Bahnmaterials und der damit verbundenen Ausweichbewegung der Sonotrode 26 entgegen gewirkt. Durch die Ausweichbewegung wird der Spalt 29 so weit geöffnet, dass die einer vorhergehenden Naht folgende Naht keine geeignete Ultraschallschweißung erfährt und daher nicht die gewünschte Festigkeit aufweist. Die Vorsteuerung bestimmt eine Korrektur der Sollposition POSₛₒₗₗ und/oder der Sollamplitude Aₛₒₗₗ für die Winkelposition ϕ, an der sich die Querkontur 37 zur Herstellung der folgenden Naht befindet. Bezug nehmend auf das spezielle Beispiel der Ausweichbewegung wird durch die Vorsteuerung der Sollposition POSₛₒₗₗ der Spalt 29 verkleinert und/oder durch die Vorsteuerung der Sollamplitude Aₛₒₗₗ die Amplitude der Ultraschallschwingung vergrößert. Dadurch ist die folgende Naht mit zufriedenstellender Festigkeit herstellbar. Es ist ebenfalls bevorzugt, auf diese Weise andere Störungen der Ultraschallbearbeitung zu eliminieren.

Figur 8 zeigt schematisch eine weitere bevorzugte Ausführungsform der Ultraschallbearbeitungsvorrichtung 1. Hier wird auf den Spaltregler 60 verzichtet. Stattdessen wird die Sonotrode 26 manuell oder mithilfe eines Stellglieds 28 auf eine vorbestimmte Position eingestellt und dort gehalten. Damit liegt ein definierter Spalt 29 vor, durch den sich die Materialbahn bewegt. Die leistungsabhängige Regelung des Ultraschallgenerators 10 und damit der Ultraschallbearbeitungsvorrichtung 1 erfolgt über den Amplitudenregler 70, wie er oben beschrieben worden ist. Die erforderlichen Zustandsdaten für die Regelung oder Steuerung durch den Amplitudenregler 70 erhält dieser vom Triggerblock TB in Kombination mit dem Bearbeitungsblock BB10. Um die Genauigkeit der Amplitudenregelung 70 zu erhöhen, ist es ebenfalls bevorzugt, die Amplitudenregelung 70 mit einer Auswahl der ermittelten Daten des Messwerterfassungsblocks MB zu versorgen. Daher wird gemäß der bevorzugten Ausführungsform nach Fig. 8 die durch den Mittelwertblock MB bestimmte Ist-Leistung P_{ist_}des Ultraschallgenerators 10 an die Amplitudenregelung 70 weitergeleitet. Zudem ist es bevorzugt, die oben beschriebene Vorsteuerung mit dem Block VSA mit dem Amplitudenregler 70 zu kombinieren.

### Bezugszeichenliste

- 1: Ultraschallbearbeitungsvorrichtung
- 10: Ultraschallgenerator
- 12: Leistungsteil
- 14: Signalerfassung
- 16: Signalverarbeitung
- 22: Konverter
- 24: Booster
- 26: Sonotrode
- 27: Positionsregler
- 28: Stellmotor für Sonotrode mit Positionsaufnehmer
- 29: Spalt
- 30: Walze/Amboss
- 32: gleichmäßige Umfangsfläche
- 34: nicht-gleichmäßige Umfangsfläche
- 36, 37: erfassbare Kontur
- 38: Winkelgeschwindigkeitssensor
- 40: Materialbahn
- 42: Quernaht
- 44: Bereich zwischen den Quernähten 42
- 50: Steuer/Regel-Modul
- 60: Spaltregler
- 70: Amplitudenregler
- P₃₆, P₃₇: Peak in Generatordaten
- S1, S2: Speicher
- RF1, RF2: Regler/Filter
- TB: Triggerblock
- BB10, BB20: Berechnungsblock
- MB: Messwerterfassungsblock
- VSP: Vorsteuerung zur Positionsbestimmung
- VSA: Vorsteuerung zur Amplitudenbestimmung
- U_{N}: elektrische Versorgungsspannung

## Patentansprüche

1. Ultraschallbearbeitungsvorrichtung (1), die die folgenden Merkmale aufweist:
einen Ultraschallgenerator (10), einen Konverter (22) und mindestens eine Sonotrode (26) mit gegenüberliegend angeordnetem Gegenwerkzeug, die um einen Spalt (29) voneinander beabstandet sind, wobei die Sonotrode (26) oder das Gegenwerkzeug drehbar angeordnet ist und eine gleichmäßige Umfangsfläche (32) aufweist, **dadurch gekennzeichnet, dass** die Ultraschallbearbeitungsvorrichtung (1) ein integriertes Steuer/Regel-Modul (50) aufweist, das in eine interne Signalverarbeitung (16) des Ultraschallgenerators (10) integriert ist, sodass bezogen auf den Ultraschallgenerator (10) eine Mehrzahl von Generatordaten, insbesondere eine elektrische Spannung U, ein elektrischer Strom I, eine Ist-Amplitude Aᵢₛₜ und/oder eine Ist-Generator-Leistung Pᵢₛₜ, im Ultraschallgenerator (10) verarbeitbar ist, wobei
a. über einen Spalt-Regler (60) im Steuer-/Regel-Modul (50) ein Leistungs-Istwert Pᵢₛₜ mit einem Leistungs-Sollwert Pₛₒₗₗ des Ultraschallgenerators (10) vergleichbar ist, um zur Einstellung des Leistungs-Sollwerts Pₛₒₗₗ des Ultraschallgenerators (10) einen Positions-Sollwert POSₛₒₗₗ der Sonotrode (26) relativ zum Gegenwerkzeug vorzugeben, und/oder wobei
b. über einen Amplitudenregler (70) im Steuer-/Regel-Modul (50) ein Leistungs-Istwert Pᵢₛₜ mit einem Leistungs-Sollwert Pₛₒₗₗ des Ultraschallgenerators (10) vergleichbar ist, um zur Einstellung des Leistungs-Sollwerts Pₛₒₗₗ des Ultraschallgenerators (10) einen Amplituden-Sollwert Aₛₒₗₗ dem Ultraschallgenerator (10) vorzugeben.

2. Ultraschallbearbeitungsvorrichtung (1) gemäß Anspruch 1, wobei mit einem externen Sensor eine Winkelgeschwindigkeit ω des drehbar angeordneten Gegenwerkzeugs oder der drehbar angeordneten Sonotrode (26) erfassbar ist, die an den Spaltregler (60) und/oder den Amplitudenregler (70) im Ultraschallgenerator (10) übermittelbar ist.

3. Ultraschallbearbeitungsvorrichtung (1), die die folgenden Merkmale aufweist:
einen Ultraschallgenerator (10), einen Konverter (22) und mindestens eine Sonotrode (26) mit gegenüberliegend angeordnetem Gegenwerkzeug, die um einen Spalt (29) voneinander beabstandet sind, wobei die Sonotrode (26) oder das Gegenwerkzeug drehbar angeordnet ist und eine nicht-gleichmäßige Umfangsfläche (34) aufweist, **dadurch gekennzeichnet, dass** die Ultraschallbearbeitungsvorrichtung (1) ein integriertes Steuer/Regel-Modul (50) aufweist, das in eine interne Signalverarbeitung (16) des Ultraschallgenerators (10) integriert ist, so dass bezogen auf den Ultraschallgenerator (10) eine Mehrzahl von Generatordaten, insbesondere eine elektrische Spannung U, ein elektrischer Strom I, eine Ist-Amplitude Aᵢₛₜ und/oder eine Ist-Generatorleistung Pᵢₛₜ, im Ultraschallgenerator (10) verarbeitbar ist, wobei
a. über einen Spaltregler (60) im Steuer-/Regel-Modul (50) ein Leistungs-Istwert Pᵢₛₜ mit einem Leistungs-Sollwert Pₛₒₗₗ des Ultraschallgenerators (10) vergleichbar ist, um zur Einstellung des Leistungs-Sollwerts Pₛₒₗₗ des Ultraschallgenerators (10) einen Positions-Sollwert Posₛₒₗₗ der Sonotrode (26) relativ zum Gegenwerkzeug vorzugeben, und/oder wobei
b. über einen Amplitudenregler (70) ein Leistungs-Istwert Pᵢₛₜ mit einem Leistungs-Sollwert Pₛₒₗₗ des Ultraschallgenerators (10) vergleichbar ist, um zur Einstellung des Leistungs-Sollwerts Pₛₒₗₗ des Ultraschallgenerators (10) einen Amplituden-Sollwert Aₛₒₗₗ dem Ultraschallgenerator (10) vorzugeben.

4. Ultraschallbearbeitungsvorrichtung (1) gemäß Anspruch 3, in der die nicht-gleichmäßige Umfangsfläche (34) des Gegenwerkzeugs oder der Sonotrode (26) mindestens eine erfassbare Kontur (36, 37) aufweist, die in mindestens einem Datensatz der Mehrzahl von Generatordaten aufgetragen über eine Zeit mindestens ein sich zeitlich periodisch wiederholendes Muster aufgrund einer Drehung des Gegenwerkzeugs oder der Sonotrode (26) erzeugt, sodass basierend auf einer Systemzeit des Steuer/Regel-Moduls (50) im Steuer-/Regelmodul (50) eine Winkelgeschwindigkeit des Gegenwerkzeugs ohne einen externen Sensor am Gegenwerkzeug bestimmbar ist.

5. Ultraschallbearbeitungsvorrichtung (1) gemäß einem der vorhergehenden Ansprüche, wobei das Gegenwerkzeug eine Walze (30) ist und die Sonotrode (26) gegenüber der Walze (30) verstellbar angeordnet ist, sodass eine Ist-Position der Sonotrode (26) mit definiertem Spalt (29) relativ zur Walze (30) über einen Positionssensor erfassbar und eine Soll-Position Posₛₒₗₗ mithilfe eines Stellmotors (28) einstellbar ist.

6. Ultraschallbearbeitungsvorrichtung (1) gemäß einem der vorhergehenden Ansprüche, wobei die Ultraschallbearbeitungsvorrichtung (1) den Amplitudenregler (70) aufweist und der Amplitudenregler (70) digital arbeitet, sodass innerhalb des Steuer/Regel-Moduls (50) der Leistungs-Istwert Pᵢₛₜ des Ultraschallgenerators (10) anpassbar ist.

7. Ultraschallbearbeitungsvorrichtung (1) gemäß Anspruch 6, wobei der Amplitudenregler (70) ohne Spaltregler (60) vorgesehen ist und bei eingestellter Spaltbreite zwischen dem Gegenwerkzeug, vorzugsweise eine Walze (30), und der Sonotrode (26) ein Abstand zwischen der Sonotrode (26) und der Walze (30) über die Einstellung des Amplituden-Sollwerts regelbar ist.

8. Ultraschallbearbeitungsvorrichtung (1) gemäß Anspruch 7, wobei die verstellbare Sonotrode (26) oder das verstellbare Gegenwerkzeug während des Betriebs der Ultraschallbearbeitungsvorrichtung (1) fest anordenbar ist, sodass eine motorische Positionierung der Sonotrode (26) oder des Gegenwerkzeugs über einen Positionsaufnehmer nicht erforderlich ist.

9. Ultraschallbearbeitungsvorrichtung (1) gemäß einem der Ansprüche 1 bis 7, wobei der Spaltregler (60) und der Amplitudenregler (70) in Kombination einsetzbar sind, sodass der Leistungssollwert Pₛₒₗₗ des Ultraschallgenerators (10) über eine aktive Spalteinstellung in Kombination mit einer Amplitudeneinstellung der Sonotrode (26) einregelbar ist.

10. Ultraschallbearbeitungsvorrichtung (1) gemäß einem der vorhergehenden Ansprüche 3 bis 9 in Kombination mit Anspruch 4, in der mit dem Steuer/Regel-Modul (50) im zeitlichen Bereich der sich wiederholenden Muster Bearbeitungszeiten der Ultraschallbearbeitungsvorrichtung (1) erkennbar sind, sodass Steuer- und Regelvorgänge für den Leistungs-Istwert Pᵢₛₜ des Ultraschallgenerators (10) und/oder den Amplituden-Istwert Aᵢₛₜ und/oder den Positions-Sollwert POSₛₒₗₗ nur während der Bearbeitungszeiten durchgeführt werden.

11. Ultraschallbearbeitungsvorrichtung (1) gemäß einem der vorhergehenden Ansprüche, in der der Spalt-Regler (60) eine Reaktionszeit der Ultraschallbearbeitungsvorrichtung (1) auf Steuer-/Regel-Eingriffe des Steuer-/Regelmoduls (50) in einem Bereich < 50 ms aufweist.

12. Ultraschallbearbeitungsvorrichtung (1) gemäß einem der vorhergehenden Ansprüche, in der der Amplitudenregler (70) eine Reaktionszeit der Ultraschallbearbeitungsvorrichtung (1) auf Steuer-/Regel-Eingriffe des Steuer-/Regel-Moduls (50) in einem Bereich von < 10 ms, vorzugsweise < 8 ms und insbesondere < 5 ms, aufweist.

13. Ultraschallbearbeitungsverfahren einer Ultraschallbearbeitungsvorrichtung (1) aufweisend:
einen Ultraschallgenerator (10), einen Konverter (22) und mindestens eine Sonotrode (26) mit gegenüberliegend angeordnetem Gegenwerkzeug, die um einen Spalt (29) voneinander beabstandet sind, wobei die Sonotrode (26) oder das Gegenwerkzeug drehbar angeordnet ist und eine gleichmäßige (32) oder eine nicht-gleichmäßige Umfangsfläche (34) aufweist,
**gekennzeichnet durch**
ein integriertes Steuer/Regel-Modul (50), das in eine interne Signalverarbeitung (16) des Ultraschallgenerators (10) integriert ist, so dass bezogen auf den Ultraschallgenerator (10) eine Mehrzahl von Generatordaten, insbesondere eine elektrische Spannung U, ein elektrischer Strom I, eine Ist-Amplituden Aᵢₛₜ und/oder eine Ist-Generatorleistung Pᵢₛₜ, im Ultraschallgenerator (10) verarbeitbar ist, wobei das Ultraschallbearbeitungsverfahren die folgenden Schritte umfasst:
a) Bestimmen einer Winkelgeschwindigkeit (Schritt I) des drehbar angeordneten Gegenwerkzeugs oder der drehbar angeordneten Sonotrode (26),
b) Erfassen (Schritt II) mindestens eines Datensatzes aus der Mehrzahl von Generatordaten,
c) Vergleichen (Schritt III) eines Leistungs-Istwerts Pᵢₛₜ mit einem Leistungs-Sollwert Pₛₒₗₗ des Ultraschallgenerators (10) in einem Spaltregler (60) und Vorgeben eines Positions-Sollwerts POSsₛₒₗₗ der Sonotrode (26) relativ zum Gegenwerkzeug
und/oder
d) Vergleichen (Schritt IV) eines Leistungs-Istwerts Pᵢₛₜ mit einem Leistungs-Sollwert Pₛₒₗₗ des Ultraschallgenerators (10) und Vorgeben eines Amplituden-Sollwerts im Ultraschallgenerator (10), um den Leistungs-Sollwert Pₛₒₗₗ einzustellen.

14. Ultraschallbearbeitungsverfahren gemäß Anspruch 13 mit einer Walze (30) mit gleichmäßiger Umfangsfläche (32) als Gegenwerkzeug, das die weiteren Schritte aufweist:
Erfassen einer Winkelgeschwindigkeit der Walze (30) mit einem externen Sensor an der Walze (30) und
Weiterleiten der Winkelgeschwindigkeit an den Spaltregler (60) und/oder den Amplitudenregler (70).

15. Ultraschallbearbeitungsverfahren gemäß Anspruch 13 mit einer Walze (30) mit nicht-gleichmäßiger Umfangsfläche (34) als Gegenwerkzeug, die mindestens eine erfassbare Kontur (36, 37) aufweist, wobei das Ultraschallbearbeitungsverfahren die weiteren Schritte umfasst:
Erfassen mindestens eines Datensatzes der Mehrzahl von Generatordaten über eine Mehrzahl von Umdrehungen der Walze (30),
Auswerten von zeitlich periodisch auftretenden Mustern in mindestens einem Datensatz der Mehrzahl von Generatordaten aufgetragen über die Zeit basierend auf einer Systemzeit des Steuer/Regel-Moduls (50), sodass eine Winkelgeschwindigkeit der Walze (30) ohne externen Sensor bestimmbar ist, und
Weiterleiten der Winkelgeschwindigkeit an den Spaltregler (60) und/oder den Amplitudenregler (70).

16. Ultraschallbearbeitungsverfahren gemäß Anspruch 15 mit dem weiteren Schritt:
Bestimmen von Bearbeitungszeiten im zeitlichen Bereich der periodisch auftretenden Muster und
Durchführen von Auswerte- und/oder Steuer- und/oder Regelvorgängen für den Leistungs-Istwert Pᵢₛₜ des Ultraschallgenerators (10) und/oder den Amplituden-Istwert Aᵢₛₜ und/oder den Positions-Sollwert Posₛₒₗₗ nur während der Bearbeitungszeiten.

17. Ultraschallbearbeitungsverfahren gemäß einem der vorhergehenden Ansprüche 13 oder 14, mit dem weiteren Schritt:
Einstellen einer Soll-Position Posₛₒₗₗ der Sonotrode (26) mit definiertem Spalt (29) relativ zur Walze (30) über einen Positionssensor und einen Stellmotor (28).

18. Ultraschalbearbeitungsverfahren gemäß einem der Ansprüche 13, 15 oder 16, mit dem weiteren Schritt:
Einstellen eines festen Spalts (29) zwischen der Sonotrode (26) und der Walze (30), wobei kein Positionssensor mit Stellmotor (28) erforderlich ist, und
Einregeln des Leistungssollwerts Pₛₒₗₗ des Ultraschallgenerators (10) durch Einstellen des Amplituden-Sollwerts Aₛₒₗₗ der Sonotrode (26).

19. Ultraschallbearbeitungsverfahren gemäß einem der Ansprüche 13, 15 oder 16 mit dem weiteren Schritt:
Einregeln des Leistungs-Sollwerts Pₛₒₗₗ des Ultraschallgenerators (10) mit Hilfe des Spaltreglers (60) und des Amplitudenreglers (70) in Kombination, wobei der Leistungs-Sollwert Pₛₒₗₗ des Ultraschallgenerators (10) über eine aktive Spalteinstellung in Kombination mit einer Amplitudeneinstellung der Sonotrode (26) einregelbar ist.

20. Ultraschallbearbeitungsverfahren gemäß Anspruch 18, mit dem weiteren Schritt:
Aufschalten einer Vorsteuerfunktion auf den Amplitudenregler (70) und/oder den Positionsregler (27), sodass eine vorausschauende Amplitudenregelung erfolgt.

21. Ultraschallbearbeitungsverfahren gemäß Anspruch 15, mit dem weiteren Schritt:
Bestimmen von Bearbeitungszeiten anhand der zeitlich periodisch auftretenden Muster und
Aufschalten einer Vorsteuerung auf mindestens eine Stellgröße zu den bestimmten Bearbeitungszeiten, sodass systembedingte zeitliche Verschiebungen oder Störeinflüsse in den Stellgrößen bei der Bearbeitung der Materialbahnen vorausschauend berücksichtigt werden.

22. Ultraschallbearbeitungsverfahren gemäß einem der Ansprüche 13 bis 21, wobei der Spaltregler (60) eine Reaktionszeit der Ultraschallbearbeitungsvorrichtung (1) auf Steuer-/Regel-Eingriffe des Steuer-/Regel-Moduls (50) in einem Bereich von < 50 ms aufweist.

23. Ultraschallbearbeitungsverfahren gemäß einem der Ansprüche 13 bis 22, wobei der Amplitudenregler (70) eine Reaktionszeit der Ultraschallbearbeitungsvorrichtung (1) auf Steuer-/Regel-Eingriffe des Steuer-/Regel-Moduls (50) in einem Bereich von < 10 ms, vorzugsweise < 8 ms und insbesondere < 5 ms, aufweist.

## Claims

1. Ultrasonic processing device (1) comprising the following features:
an ultrasonic generator (10), a converter (22) and at least one sonotrode (26) with an oppositely arranged counter tool, which are spaced from each other by a gap (29), wherein the sonotrode (26) or the counter tool is arranged rotatably and comprises an even circumferential surface (32), **characterized in that** the ultrasonic processing device (1) comprises an integrated controlling/regulating module (50), which is integrated into an internal signal processing (16) of the ultrasonic generator (10) so that, with respect to the ultrasonic generator (10), a plurality of generator data, especially an electric voltage U, an electric current I, an actual amplitude Aᵢₛₜ and/or an actual generator power Pᵢₛₜ are processible in the ultrasonic generator (10), wherein
a. by means of a gap regulator (60) within the controlling/regulating module (50), a power actual value Pᵢₛₜ is comparable with a power reference value Pₛₒₗₗ of the ultrasonic generator (10), in order to predetermine a position reference value POSₛₒₗₗ of the sonotrode (26) relatively to the counter tool for adjustment of the power reference value Pₛₒₗₗ of the ultrasonic generator, and/or wherein
b. by means of an amplitude regulator (70) within the controlling/regulating module (50), a power actual value Pᵢₛₜ is comparable with a power reference value Pₛₒₗₗ of the ultrasonic generator (10), in order to predetermine an amplitude reference value Aₛₒₗₗ to the ultrasonic generator (10) for adjustment of the power reference value Pₛₒₗₗ of the ultrasonic generator (10).

2. Ultrasonic processing device (1) according to claim 1, wherein by means of an external sensor, an angular speed ω of the rotatably arranged counter tool or the rotatably arranged sonotrode (16) is detectable, which is transmittable to the gap regulator (60) and/or the amplitude regulator (70) within the ultrasonic generator (10).

3. Ultrasonic processing device (1) comprising the following features:
an ultrasonic generator (10), a converter (22) and at least one sonotrode (26) with an oppositely arranged counter tool, which are spaced from each other by a gap (29), wherein the sonotrode (26) or the counter tool is arranged rotatably and comprises an non-even circumferential surface (34), **characterized in that** the ultrasonic processing device (1) comprises an integrated controlling/regulating module (50), which is integrated in an internal signal processing (16) of the ultrasonic generator (10) so that, with respect to the ultrasonic generator (10), a plurality of generator data, especially an electric voltage U, an electric current I, an actual amplitude Aᵢₛₜ and/or an actual generator power Pᵢₛₜ, is processible in the ultrasonic generator (10), wherein
a. by means of a gap regulator (60) within the controlling/regulating module (50), a power actual value Pᵢₛₜ is comparable with a power reference value Pₛₒₗₗ of the ultrasonic generator (10), in order to predetermine a position reference value POSₛₒₗₗ of the sonotrode (26) relative to the counter tool for adjustment of the power reference value Pₛₒₗₗ of the ultrasonic generator (10), and/or wherein
b. by means of an amplitude regulator (70), a power actual value Pᵢₛₜ is comparable with a power reference value Pₛₒₗₗ of the ultrasonic generator (10), in order to predetermine an amplitude reference value Aₛₒₗₗ to the ultrasonic generator (10) for adjustment of the power reference value Pₛₒₗₗ of the ultrasonic generator (10).

4. Ultrasonic processing device (1) according to claim 3, in which the non-even circumferential surface (34) of the counter tool or the sonotrode (26) comprises at least one detectable contour (36, 37), which creates in at least one data set of the plurality of generator data plotted against/recorded over a time, at least one timely periodically repeating pattern due to a rotation of the counter tool or the sonotrode (26) so that based on a system time of the controlling/regulating module (50) within the controlling/regulating module (50), an angular speed of the counter tool is determinable without an external sensor at the counter tool.

5. Ultrasonic processing device (1) according to one of the preceding claims, wherein the counter tool is a roll (30) and the sonotrode (26) is arranged adjustably with respect to the roll (30), so that an actual position of the sonotrode (26) with defined gap relative to the roll (30) is detectable via a position sensor and a reference position POSₛₒₗₗ is adjustable by means of an actuator (28).

6. Ultrasonic processing device (1) according to one of the preceding claims, wherein the ultrasonic processing device (1) comprises the amplitude regulator (70) and the amplitude regulator (70) operates digitally so that, within the controlling/regulating module (50), the power actual value Pᵢₛₜ of the ultrasonic generator (10) is adjustable.

7. Ultrasonic processing device (1) according to claim 6, wherein the amplitude regulator (70) is provided without a gap regulator (60) and at adjusted gap width between the counter tool, preferably a roll (30), and the sonotrode (26), a distance between the sonotrode (26) and the counter tool (30) is adjustable by means of the adjusting of the amplitude reference value.

8. Ultrasonic processing device (1) according to claim 7, wherein the adjustable sonotrode (26) or the adjustable counter tool is fixedly arrangeable during operation of the ultrasonic processing device (1), so that a motoric positioning of the sonotrode (26) or the counter tool by means of a position sensor is not required.

9. Ultrasonic processing device (1) according to one of the claims 1 to 7, wherein the gap regulator (60) and the amplitude regulator (70) can be used in combination with each other, so that the power reference value Pₛₒₗₗ of the ultrasonic generator (10) is adjustable by means of an active gap adjustment in combination with an amplitude adjustment of the sonotrode (26).

10. Ultrasonic processing device (1) according to one of the preceding claims 3 to 9 in combination with claim 4, in which, by means of the controlling/regulating module, processing times of the ultrasonic processing device (1) are recognizable in the timely periodically repeating patterns so that controlling and regulating processes for the power actual value Pᵢₛₜ of the ultrasonic generator (10) and/or the amplitude actual value Aᵢₛₜ and/or the position reference value POSₛₒₗₗ are only performed during the processing times.

11. Ultrasonic processing device (1) according to one of the preceding claims, in which the gap regulator (60) has a reaction time of the ultrasonic processing device (1) to controlling/regulating interventions of the controlling/regulating module (50) in a range of < 50 ms.

12. Ultrasonic processing device (1) according to one of the preceding claims, in which the amplitude regulator (70) has a reaction time of the ultrasonic processing device (1) to controlling/regulating interventions of the controlling/regulating module in the range of <10 ms, preferably <8 ms and especially <5 ms.

13. Ultrasonic processing method of an ultrasonic processing device (1), comprising:
an ultrasonic generator (10), a converter (22) and at least one sonotrode (26) with an oppositely arranged counter tool, which are spaced from each other by a gap (29), wherein the sonotrode (26) or the counter tool is arranged rotatably and comprises an even (32) or an uneven circumferential surface (34),
**characterized by**
an integrated controlling/regulating module (50), which is integrated in an internal signal processing (16) of the ultrasonic generator (10) so that, with respect to the ultrasonic generator (10), a plurality of generator data, especially an electric voltage U, an electric current I, an actual amplitude Aᵢₛₜ and/or an actual generator power Pᵢₛₜ, is processible within the ultrasonic generator (10), wherein the ultrasonic processing method comprises the following steps:
a. determining of an angular speed (step I) of the rotatably arranged counter tool or the rotatably arranged sonotrode (26),
b. detecting (step II) of at least one data set of the plurality of generator data,
c. comparing (step III) of a power actual value Pᵢₛₜ with a power reference value Pₛₒₗₗ of the ultrasonic generator (10) in a gap regulator (60) and predetermining of a position reference value POSₛₒₗₗ of the sonotrode (26), relatively to the counter tool
and/or
d. comparing (step IV) of a power actual value Pᵢₛₜ with a power reference value Pₛₒₗₗ of the ultrasonic generator (10) and predetermining an amplitude reference value in the ultrasonic generator (10) for adjusting the power reference value Pₛₒₗₗ.

14. Ultrasonic processing method according to claim 13 comprising a roll (30) having an even circumferential surface (32) as counter tool, comprising the further steps:
detecting an angular speed of the roll (30) with an external sensor at the roll (30) and
transmitting the angular speed to the gap regulator (60) and/or the amplitude regulator (70).

15. Ultrasonic processing method according to claim 13, comprising a roll (30) having an non-even circumferential surface (34) as counter tool, which has at least one detectable contour (36, 37), wherein the ultrasonic processing method comprises the further steps:
detecting at least one data set of the plurality of generator data over a plurality of revolutions of the roll (30),
evaluating timely periodically occurring patterns in at least one data set of the plurality of generator data plotted against/recorded over a time based on a system time of the controlling/regulating module (50) so that an angular speed of the roll (30) is determinable without external sensor, and
transmitting the angular speed to the gap regulator (60) and/or the amplitude regulator (70).

16. Ultrasonic processing method according to claim 15, comprising the further step:
determining processing times in the timely range of the periodically occurring patterns and
performing evaluating and/or controlling and/or regulating processes for the power actual value Pᵢₛₜ of the ultrasonic generator (10) and/or the amplitude actual value Aᵢₛₜ and/or the position reference value POSₛₒₗₗ only during the processing times.

17. Ultrasonic processing method according to one of the preceding claims 13 or 14, comprising the further step:
adjusting a reference position POSₛₒₗₗ of the sonotrode (26) with a defined gap (29) relative to the roll (30) by means of a position sensor and an actuator (28).

18. Ultrasonic processing method according to one of the claims 13, 15 or 16, comprising the further step:
adjusting a fixed gap (29) between the sonotrode (26) and the roll (30), wherein no position sensor with actuator (28) is required, and
regulating the power reference value Pₛₒₗₗ of the ultrasonic generator (10) by adjusting the amplitude reference value Aₛₒₗₗ of the sonotrode (26).

19. Ultrasonic processing method according to one of the claims 13, 15 or 16, comprising the further step:
adjusting the power reference value Pₛₒₗₗ of the ultrasonic generator (10) by means of a combination of the gap regulator (60) and the amplitude regulator (70), wherein the power reference value Pₛₒₗₗ of the ultrasonic generator (10) is regulatable by means of an active gap adjustment in combination with an amplitude adjustment of the sonotrode (26).

20. Ultrasonic processing method according to claim 18, comprising the further step:
intrusion/overriding a pre-controlling function on the amplitude regulator (70) and/or the position regulator (27) so that a predictive amplitude regulating is carried out.

21. Ultrasonic processing method according to claim 15, comprising the further step:
determining processing times based on the timely periodically occurring patterns and
intrusion/overriding of a pre-controlling function onto at least one correcting variable at the determined processing times so that systemic timely displacements or disturbing influences in the correcting variables at the processing of the material webs are considered predictively.

22. Ultrasonic processing method according to one of the claims 13 to 21, wherein the gap regulator (60) has a reaction time of the ultrasonic processing device (1) to controlling/regulating interventions of the controlling/regulating module (50) in a range of < 50 ms.

23. Ultrasonic processing method according to one of the claims 13 to 22, wherein the amplitude regulator (70) has a reaction time of the ultrasonic processing device (1) on controlling/regulating interventions of the controlling/regulating module (50) in the range of < 10 ms, preferably < 8 ms and especially < 5 ms.

## Revendications

1. Dispositif de traitement ultrasonique (1) présentant les caractéristiques suivantes :
- un générateur d'ultrasons (10), un convertisseur (22) et au moins une sonotrode (26) avec un contre-outil disposé sur le côté opposé, ceux-ci étant espacés l'un de l'autre par une fente (29), la sonotrode (26) ou le contre-outil étant disposé(e) de façon rotative et présentant une surface périphérique homogène (32),
**caractérisé en ce que** le dispositif de traitement ultrasonique (1) présente un module de commande/réglage (50) intégré, lequel est intégré dans un moyen de traitement de signaux interne (16) du générateur d'ultrasons (10), de telle façon que par rapport au générateur d'ultrasons (10), une pluralité de données de générateur, en particulier une tension électrique U, un courant électrique I, une amplitude réelle Aᵢₛₜ et/ou une puissance réelle du générateur Pᵢₛₜ, peut être traitée dans le générateur d'ultrasons (10), dans lequel
a. une valeur de puissance réelle Pᵢₛₜ peut être comparée avec une valeur de puissance théorique Pₛₒₗₗ du générateur d'ultrasons (10) par le biais d'un moyen de réglage de fente (60) dans le module de commande/réglage (50), pour indiquer une valeur de position théorique Posₛₒₗₗ de la sonotrode (26) par rapport au contre-outil afin d'ajuster la valeur de puissance théorique Pₛₒₗₗ du générateur d'ultrasons (10), et/ou dans lequel
b. une valeur de puissance réelle Pᵢₛₜ peut être comparée avec une valeur de puissance théorique Pₛₒₗₗ du générateur d'ultrasons (10) par le biais d'un moyen de réglage d'amplitude (70) dans le module de commande/réglage (50), pour indiquer une valeur d'amplitude théorique Aₛₒₗₗ au générateur d'ultrasons (10) afin d'ajuster la valeur de puissance théorique Pₛₒₗₗ du générateur d'ultrasons (10) .

2. Dispositif de traitement ultrasonique (1) selon la revendication 1, dans lequel un capteur externe permet de détecter une vitesse angulaire ω du contre-outil disposé de façon rotative ou de la sonotrode (26) disposée de façon rotative, laquelle peut être transmise au moyen de réglage de fente (60) et/ou au moyen de réglage d'amplitude (70) dans le générateur d'ultrasons (10).

3. Dispositif de traitement ultrasonique (1) présentant les caractéristiques suivantes :
- un générateur d'ultrasons (10), un convertisseur (22) et au moins une sonotrode (26) avec un contre-outil disposé sur le côté opposé, ceux-ci étant espacés l'un de l'autre par une fente (29), la sonotrode (26) ou le contre-outil étant disposé(e) de façon rotative et présentant une surface périphérique non homogène (34),
**caractérisé en ce que** le Dispositif de traitement ultrasonique (1) présente un module de commande/réglage (50) intégré, lequel est intégré dans un moyen de traitement de signaux interne (16) du générateur d'ultrasons (10), de telle façon que par rapport au générateur d'ultrasons (10), une pluralité de données de générateur, en particulier une tension électrique U, un courant électrique I, une amplitude réelle Aᵢₛₜ et/ou une puissance réelle du générateur Pᵢₛₜ, peut être traitée dans le générateur d'ultrasons (10), dans lequel
a. une valeur de puissance réelle Pᵢₛₜ peut être comparée avec une valeur de puissance théorique Pₛₒₗₗ du générateur d'ultrasons (10) par le biais d'un moyen de réglage de fente (60) dans le module de commande/réglage (50), pour indiquer une valeur de position théorique Posₛₒₗₗ de la sonotrode (26) par rapport au contre-outil afin d'ajuster la valeur de puissance théorique Pₛₒₗₗ du générateur d'ultrasons (10), et/ou dans lequel
b. une valeur de puissance réelle Pᵢₛₜ peut être comparée avec une valeur de puissance théorique Pₛₒₗₗ du générateur d'ultrasons (10) par le biais d'un moyen de réglage d'amplitude (70), pour indiquer une valeur d'amplitude théorique Aₛₒₗₗ au générateur d'ultrasons (10) afin d'ajuster la valeur de puissance théorique Pₛₒₗₗ du générateur d'ultrasons (10) .

4. Dispositif de traitement ultrasonique (1) selon la revendication 3, dans lequel la surface périphérique non homogène (34) du contre-outil ou de la sonotrode (26) présente au moins un contour détectable (36, 37), lequel produit au moins un motif se répétant périodiquement dans le temps appliqué pendant une durée du fait d'une rotation du contre-outil ou de la sonotrode (26) dans au moins un ensemble de données de la pluralité de données de générateur, de manière à pouvoir déterminer une vitesse angulaire du contre-outil sans capteur externe sur le contre-outil dans le module de commande/réglage (50) sur la base d'un temps de système du module de commande/réglage (50) .

5. Dispositif de traitement ultrasonique (1) selon l'une des revendications précédentes, dans lequel le contre-outil est un rouleau (30) et la sonotrode (26) est disposée de manière réglable par rapport au rouleau (30), de telle façon qu'une position réelle de la sonotrode (26) avec une fente définie (29) par rapport au rouleau (30) peut être détectée par un capteur de position et une position théorique Posₛₒₗₗ peut être réglée à l'aide d'un moteur de commande (28).

6. Dispositif de traitement ultrasonique (1) selon l'une des revendications précédentes, dans lequel le dispositif de traitement ultrasonique (1) présente le moyen de réglage d'amplitude (70) et le moyen de réglage d'amplitude (70) travaille de façon numérique, de sorte que la valeur de puissance réelle Pᵢₛₜ du générateur d'ultrasons (10) peut être adaptée dans le module de commande/réglage (50).

7. Dispositif de traitement ultrasonique (1) selon la revendication 6, dans lequel le moyen de réglage d'amplitude (70) est prévu sans moyen de réglage de fente (60) et un espacement entre la sonotrode (26) et le rouleau (30) peut être réglé en ajustant la valeur d'amplitude théorique lorsque la largeur de fente entre le contre-outil, de préférence un rouleau (30), et la sonotrode (26) est ajustée.

8. Dispositif de traitement ultrasonique (1) selon la revendication 7, dans lequel la sonotrode (26) réglable ou le contre-outil réglable peut être disposé(e) fixement pendant le fonctionnement du dispositif de traitement ultrasonique (1), de sorte qu'un positionnement motorisé de la sonotrode (26) ou du contre-outil par le biais d'un détecteur de position n'est pas requis.

9. Dispositif de traitement ultrasonique (1) selon l'une des revendications 1 à 7, dans lequel le moyen de réglage de fente (60) et le moyen de réglage d'amplitude (70) peuvent être utilisés de façon combinée, de sorte que la valeur de puissance théorique Pₛₒₗₗ du générateur d'ultrasons (10) peut être réglée par un ajustement de fente actif en combinaison avec un ajustement d'amplitude de la sonotrode (26).

10. Dispositif de traitement ultrasonique (1) selon l'une des revendications précédentes 3 à 9 en combinaison avec la revendication 4, dans lequel des temps de traitement du dispositif de traitement ultrasonique (1) sont reconnaissables par le module de commande/réglage (50) dans la plage temporelle des motifs répétitifs, de sorte que des processus de commande et de réglage pour la valeur de puissance réelle Pᵢₛₜ du générateur d'ultrasons (10) et/ou la valeur d'amplitude réelle Aᵢₛₜ et/ou la valeur de position théorique Posₛₒₗₗ sont exécutés uniquement pendant les temps de traitement.

11. Dispositif de traitement ultrasonique (1) selon l'une des revendications précédentes, dans lequel le moyen de réglage de fente (60) présente un temps de réaction du dispositif de traitement ultrasonique (1) par rapport à des interventions de commande/réglage du module de commande/réglage (50) dans une plage < 50 ms.

12. Dispositif de traitement ultrasonique (1) selon l'une des revendications précédentes, dans lequel le moyen de réglage d'amplitude (70) présente un temps de réaction du dispositif de traitement ultrasonique (1) par rapport à des interventions de commande/réglage du module de commande/réglage (50) dans une plage < 10 ms, de préférence < 8 ms et en particulier < 5 ms.

13. Procédé de traitement ultrasonique d'un dispositif de traitement ultrasonique (1) présentant :
- un générateur d'ultrasons (10), un convertisseur (22) et au moins une sonotrode (26) avec un contre-outil disposé sur le côté opposé, ceux-ci étant espacés l'un de l'autre par une fente (29), la sonotrode (26) ou le contre-outil étant disposé(e) de façon rotative et présentant une surface périphérique homogène (32) ou une surface périphérique non homogène (34),
**caractérisé par** un module de commande/réglage (50) intégré, lequel est intégré dans un moyen de traitement de signaux interne (16) du générateur d'ultrasons (10), de telle façon que par rapport au générateur d'ultrasons (10), une pluralité de données de générateur, en particulier une tension électrique U, un courant électrique I, une amplitude réelle Aᵢₛₜ et/ou une puissance réelle du générateur Pᵢₛₜ, peut être traitée dans le générateur d'ultrasons (10), le procédé de traitement ultrasonique comportant les étapes suivantes:
a) la détermination d'une vitesse angulaire (étape I) du contre-outil disposé de façon rotative ou de la sonotrode (26) disposée de façon rotative,
b) la détection (étape II) d'au moins un ensemble de données parmi la pluralité de données de générateur,
c) la comparaison (étape III) d'une valeur de puissance réelle Pᵢₛₜ avec une valeur de puissance théorique Pₛₒₗₗ du générateur d'ultrasons (10) dans un moyen de réglage de fente (60) et indication d'une valeur de position théorique Posₛₒₗₗ de la sonotrode (26) par rapport au contre-outil,
et/ou
d) la comparaison (étape IV) d'une valeur de puissance réelle Pᵢₛₜ avec une valeur de puissance théorique Pₛₒₗₗ du générateur d'ultrasons (10) et indication d'une valeur d'amplitude théorique dans le générateur d'ultrasons (10) afin d'ajuster la valeur de puissance théorique Pₛₒₗₗ.

14. Procédé de traitement ultrasonique selon la revendication 13, avec un rouleau (30) présentant une surface périphérique homogène (32) en tant que contre-outil, lequel présente les étapes supplémentaires suivantes :
- détection d'une vitesse angulaire du rouleau (30) avec un capteur externe sur le rouleau (30), et
- transmission de la vitesse angulaire au moyen de réglage de fente (60) et/ou au moyen de réglage d'amplitude (70).

15. Procédé de traitement ultrasonique selon la revendication 13, avec un rouleau (30) présentant une surface périphérique non homogène (34) en tant que contre-outil, lequel présente au moins un contour détectable (36, 37), le procédé de traitement ultrasonique comportant les étapes supplémentaires suivantes :
- détection d'au moins un ensemble de données parmi la pluralité de données de générateur au moyen d'une pluralité de rotations du rouleau (30),
- évaluation de motifs apparaissant périodiquement dans le temps dans au moins un ensemble de données parmi la pluralité de données de générateur, appliqués sur la durée, sur la base d'un temps de système du module de commande/réglage (50), de telle façon qu'une vitesse angulaire du rouleau (30) peut être déterminée sans capteur externe, et
- transmission de la vitesse angulaire au moyen de réglage de fente (60) et/ou au moyen de réglage d'amplitude (70).

16. Procédé de traitement ultrasonique selon la revendication 15, avec l'étape supplémentaire suivante :
- détermination de temps de traitement dans la plage temporelle du motif apparaissant périodiquement, et
- exécution de processus d'évaluation et/ou de commande et/ou de réglage pour la valeur de puissance réelle Pᵢₛₜ du générateur d'ultrasons (10) et/ou la valeur d'amplitude réelle Aᵢₛₜ et/ou la valeur de position théorique Posₛₒₗₗ uniquement pendant les temps de traitement.

17. Procédé de traitement ultrasonique selon l'une des revendications 13 ou 14, avec l'étape supplémentaire suivante :
- réglage d'une position théorique Posₛₒₗₗ de la sonotrode (26) avec une fente définie (29) par rapport au rouleau (30) au moyen d'un capteur de position et d'un moteur de commande (28).

18. Procédé de traitement ultrasonique selon l'une des revendications 13, 15 ou 16, avec l'étape supplémentaire suivante :
- ajustement d'une fente fixe (29) entre la sonotrode (26) et le rouleau (30), où aucun capteur de position avec moteur de commande (28) n'est requis, et
- réglage de la valeur de puissance théorique Pₛₒₗₗ du générateur d'ultrasons (10) par l'ajustement de la valeur d'amplitude théorique Aₛₒₗₗ de la sonotrode (26) .

19. Procédé de traitement ultrasonique selon l'une des revendications 13, 15 ou 16, avec l'étape supplémentaire suivante :
- réglage de la valeur de puissance théorique Pₛₒₗₗ du générateur d'ultrasons (10) à l'aide du moyen de réglage de fente (60) et du moyen de réglage d'amplitude (70) en combinaison, la valeur de puissance théorique Pₛₒₗₗ du générateur d'ultrasons (10) pouvant être réglée par un ajustement de fente actif en combinaison avec un ajustement d'amplitude de la sonotrode (26).

20. Procédé de traitement ultrasonique selon la revendication 18, avec l'étape supplémentaire suivante :
- commutation d'une fonction de commande préalable sur le moyen de réglage d'amplitude (70) et/ou le moyen de réglage de position (27), de manière à procéder à un réglage d'amplitude anticipé.

21. Procédé de traitement ultrasonique selon la revendication 15, avec l'étape supplémentaire suivante :
- détermination de temps de traitement à l'aide des motifs apparaissant périodiquement dans le temps, et
- commutation d'une commande préalable sur au moins une grandeur de réglage aux temps de traitement déterminés, de manière à tenir compte de façon anticipée de décalages temporels liés au système ou d'influences perturbatrices dans les grandeurs de réglage lors du traitement des bandes de matériau.

22. Procédé de traitement ultrasonique selon l'une des revendications 13 à 21, dans lequel le moyen de réglage de fente (60) présente un temps de réaction du dispositif de traitement ultrasonique (1) par rapport à des interventions de commande/réglage du module de commande/réglage (50) dans une plage < 50 ms.

23. Procédé de traitement ultrasonique selon l'une des revendications 13 à 22, dans lequel le moyen de réglage d'amplitude (70) présente un temps de réaction du dispositif de traitement ultrasonique (1) par rapport à des interventions de commande/réglage du module de commande/réglage (50) dans une plage < 10 ms, de préférence < 8 ms et en particulier < 5 ms.
